(19) Europäisches Patentamt
European Patent Office
Office européen des brevets

(11) **EP 3 626 768 B1**

(12) **EUROPEAN PATENT SPECIFICATION**

(45) Date of publication and mention
of the grant of the patent:
**11.09.2024 Bulletin 2024/37**

(21) Application number: **18801580.4**

(22) Date of filing: **15.05.2018**

(51) International Patent Classification (IPC):
**C08J 9/18** (2006.01)

(52) Cooperative Patent Classification (CPC):
**C08J 9/232; C08J 9/18;** C08J 9/122; C08J 9/224;
C08J 2201/026; C08J 2203/06; C08J 2205/044;
C08J 2207/00; C08J 2353/00

(86) International application number:
**PCT/JP2018/018770**

(87) International publication number:
**WO 2018/212183 (22.11.2018 Gazette 2018/47)**

(54) **EXPANDED PARTICLES CROSSLINKED WITH OLEFIN-TYPE THERMOPLASTIC ELASTOMER**

MIT EINEM THERMOPLASTISCHEN ELASTOMER VERNETZTE EXPANDIERTE PARTIKEL

PARTICULES EXPANSÉES RÉTICULÉES AVEC UN ÉLASTOMÈRE THERMOPLASTIQUE DE TYPE OLÉFINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.05.2017 JP 2017099329**

(43) Date of publication of application:
**25.03.2020 Bulletin 2020/13**

(73) Proprietor: **JSP Corporation
Tokyo 100-0005 (JP)**

(72) Inventors:
• **TAKAGI, Shota
Yokkaichi-shi
Mie 510-0881 (JP)**
• **OIKAWA, Masaharu
Yokkaichi-shi
Mie 510-0881 (JP)**

(74) Representative: **Gille Hrabal
Partnerschaftsgesellschaft mbB
Patentanwälte
Brucknerstraße 20
40593 Düsseldorf (DE)**

(56) References cited:
EP-A1- 3 296 350     WO-A1-2009/054212
WO-A1-2010/087111    WO-A1-2010/087111
WO-A1-2016/147775    WO-A1-2016/147775
JP-A- 2013 155 386   JP-A- 2014 141 551
JP-A- 2016 216 527   JP-A- 2016 216 527
JP-A- H0 881 594     JP-A- H0 881 594
JP-A- S 614 738      US-A1- 2011 281 963
US-A1- 2016 009 888  US-A1- 2017 362 402

**Description**

Technical Field

The present invention relates to thermoplastic olefin elastomer crosslinked expanded beads.

Background Art

As expanded beads of a thermoplastic olefin elastomer that is excellent in in-mold moldability and can provide a molded article of expanded beads excellent in the lightweight property, flexibility, repulsion, recoverability, and tensile characteristics with good balance, disclosed is crosslinked expanded beads produced by crosslinking and expanding particles of a multi-block copolymer comprising a polyethylene block and an ethylene/$\alpha$-olefin copolymer block, for example (PTL 1).

PTL2 describes a polypropylene resin pre-foamed particle characterized by comprising, as the base resin, a polypropylene resin, which can be molded under a not high hot-steam pressure in in-mold foaming molding and thus a polypropylene resin in-mold foaming molded article having a high dimensional stability at high temperature can be obtained.

PTL3 describes a method for producing cross-linked polyethylene resin expanded beads, including dispersing polyethylene resin particles containing a halogen-containing flame retardant in a dispersing medium in an autoclave, impregnating the dispersed resin particles with an organic peroxide and crosslinking the polyethylene resin therewith at a specific temperature range determined by the melting point of the polyethylene resin and by melting point or glass transition temperature of the flame retardant, impregnating the dispersed resin particles with a blowing agent, and then foaming and expanding the resulting cross-linked polyethylene-based resin particles.

PTL 4 describes a polypropylene resin composition having improved impact resistance and excellent rigidity, mechanical strength and coatability.

PTL 5 describes polyethylene resin foam particles having antistatic performance, and polyethylene resin in-mold foaming molded product and method for manufacturing same, wherein the expanded polyethylene resin particles include an antistatic agent and a base resin and are obtained by expanding polyethylene resin particles including the antistatic agent and the base resin.

Citation List

Patent Literatures

PTL 1: JP 2016-216527 A & EP3296350 A1
PTL 2: US2011/281963 A1 & WO2010/087111 A1
PTL 3: US2016/009888 A1
PTL 4: JP H08 81594 A
PTL 5: US2017/362402 A1 & WO2016/147775 A1

Summary of Invention

Technical Problem

However, when a molded article prepared by using the crosslinked expanded beads described in PTL 1 is applied to a sheet cushion material, a pad material for sports, a sole material, or another application, the tensile characteristics of the molded article may be insufficient depending on the application.

The object of the present invention is to provide thermoplastic olefin elastomer crosslinked expanded beads that can provide a molded article excellent in tensile characteristics.

Solution to Problem

As a result of earnest studies, the present inventors have found that when the configuration described below is adopted, the above problems can be solved, and thus completed the present invention.

Specifically, the present invention is as follows.

[1] Thermoplastic olefin elastomer crosslinked expanded beads, produced by crosslinking and expanding particles comprising a composition including the thermoplastic olefin elastomer as base polymer, having a content of a fraction insoluble in hot xylene of 10 to 40 wt%, and having a crystal structure such that a melting peak inherent in the thermoplastic olefin elastomer (inherent peak) and one or more melting peaks on a higher temperature side than the inherent peak (high temperature peak) appear on a DSC curve obtained by heating the crosslinked expanded beads from 23°C to 200°C at a heating rate of 10°C/min, wherein in the DSC curve, a total heat of melting is 40 to 60 J/g, and a ratio of a heat of melting of the high temperature peak to the total heat of melting is 0.15 to 0.6, and having an average value of cell diameter of 30 to 150 $\mu$m and a coefficient of variance of the cell diameter of 20% or less, and

wherein the thermoplastic olefin elastomer has a type A durometer hardness of 65 to 90 measured with a type A durometer according to ASTM D2240-05, and wherein the content of a fraction insoluble in hot xylene, and the average value of cell diameter and its coefficient of variance are determined as described in the specification.

[2] The thermoplastic olefin elastomer crosslinked expanded beads according to [1], the content of a fraction insoluble in hot xylene is 10 wt% or more and less than 30 wt%.

[3] The thermoplastic olefin elastomer crosslinked expanded beads according to [1] or [2], having an apparent density of 30 to 300 kg/m$^3$ and wherein the apparent density is being determined as described herein.

[4] The thermoplastic olefin elastomer crosslinked expanded beads according to any one of [1] to [3], wherein the thermoplastic olefin elastomer is a multi-block copolymer comprising a polyethylene block and an ethylene-$\alpha$-olefin copolymer block.

[5] An expanded beads molded article produced by subjecting the thermoplastic olefin elastomer crosslinked expanded beads according to any one of [1] to [4] to in-mold molding, and wherein the molded article has a tensile elongation of 200 to 370%, wherein, the tensile elongation is being determined as described herein.

Advantageous Effects of Invention

According to the present invention, there can be provided thermoplastic olefin elastomer crosslinked expanded beads that can provide a molded article that is excellent in tensile characteristics and has a desired shape through in-mold molding.

Brief Description of Drawing

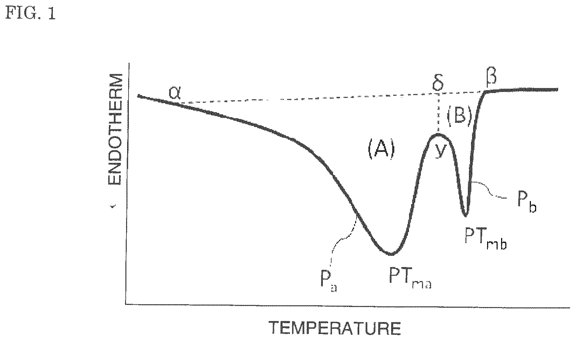

[Fig. 1] Fig. 1 is a DSC curve on the first heating of thermoplastic olefin elastomer crosslinked expanded beads according to an embodiment of the present invention.

Description of Embodiments

<Thermoplastic Olefin Elastomer Crosslinked Expanded Beads >

Thermoplastic olefin elastomer crosslinked expanded beads of the present invention is crosslinked expanded beads, produced by crosslinking and expanding particles comprising a composition including the thermoplastic olefin elastomer as base polymer, having a content of a fraction insoluble in hot xylene of 10 to 40 wt%, and having a crystal structure such that a melting peak inherent in the thermoplastic olefin elastomer (inherent peak) and one or more melting peaks on a higher temperature side than the inherent peak (high temperature peak) appear on a DSC curve obtained by heating the crosslinked expanded beads from 23°C to 200°C at a heating rate of 10°C/min, wherein in the DSC curve, a total heat of melting is 40 to 60 J/g, and a ratio of a heat of melting of the high temperature peak to the total heat of melting is 0.15 to 0.6.

Hereinafter, a thermoplastic olefin elastomer is sometimes referred to as a "TPO", and "thermoplastic olefin elastomer crosslinked expanded beads" are sometimes referred to as "crosslinked expanded beads".

First, the features of the crystal structure of the crosslinked expanded beads of the present invention will be described.

Fig. 1 shows a DSC (Differential scanning calorimetry) curve on the first heating of crosslinked expanded beads according to an embodiment of the present invention. Fig. 1 is an exemplary DSC curve obtained by heating 1 to 3 mg of the crosslinked expanded beads from 23°C to 200°C at a heating rate of 10°C/min. The ordinate axis of the graph indicates the difference in the inputs of the thermal energy per unit time applied to a specimen and a reference substance, the thermal energy being applied so as to allow the both to be at the same temperature, and a downward peak and an upward peak from the base line are an endothermic peak and an exothermic peak, respectively. The abscissa axis indicates a temperature, and the left side and the right side are the low temperature side and the high temperature side, respectively.

In Fig. 1, the DSC curve has a melting peak $P_a$ at a peak temperature $PT_{ma}$ on the lower temperature side and a melting peak $P_b$ at a peak temperature $PT_{mb}$ on the higher temperature side. In the present invention, the melting peak $P_a$ on the lower temperature side is referred to as an inherent peak, and the melting peak $P_b$ on the higher temperature side is referred to as a high temperature peak, which are sometimes referred to as the inherent peak $P_a$ and the high temperature peak $P_b$, respectively, hereinbelow.

The inherent peak $P_a$ is a melting peak derived from the crystal structure that the TPO forming the crosslinked expanded beads inherently has, and the high temperature peak $P_b$ is a melting peak derived from the crystal structure formed due to the production process of the crosslinked expanded beads.

For the DSC curve shown in Fig. 1, the total heat of melting in the DSC curve is measured as follows.

The point corresponding to the temperature of the completion of melting on the DSC curve is designated as $\beta$. The intersection of the tangential line of the baseline of the DSC curve on the higher temperature side from the temperature of the completion of melting ($\beta$) and the DSC curve on the lower temperature side from the temperature of the completion of melting ($\beta$) is designated as $\alpha$. A straight line parallel to the ordinate axis of the graph is drawn from the point y on the DSC curve, the point y being at the valley between the inherent peak $P_a$ and the high temperature peak $P_b$, and the intersection of the straight parallel line and the straight line ($\alpha$-$\beta$), with which the point $\alpha$ and the point $\beta$ are connected, is designated as $\delta$.

The area of the inherent peak $P_a$ (A) corresponds to the heat of the inherent peak $P_a$, and is defined as the area of the region surrounded with the DCS curve showing the inherent peak $P_a$, the line segment ($\alpha$-$\beta$), and the line segment (y-$\delta$).

The area of the high temperature peak $P_b$ (B) corresponds to the heat of the high temperature peak $P_b$, and is defined as the area of the region surrounded with the DCS curve showing the high temperature peak $P_b$, the line segment ($\delta$-$\beta$), and the line segment (y-$\delta$).

The total heat of melting corresponds to the peak area surrounded with the straight line ($\alpha$-$\beta$) and the segment of the DCS curve from the point $\alpha$ to the point $\beta$, and is the sum of the area of the inherent peak $P_a$ (A) and the area of the high temperature peak $P_b$ (B), i.e., [(A) + (B)].

The crosslinked expanded beads of the present invention have a crystal structure such that a high temperature peak $P_b$ appears on a DSC curve thereof, that the total heat of melting [(A) + (B)] is 40 to 60 J/g, and that the ratio of the heat of melting of the high temperature peak (B) to the total heat of melting [(A) + (B)], i.e., (B)/[(A) + (B)] is 0.15 to 0.6.

As described above, the high temperature peak $P_b$ is a melting peak derived from the crystal structure formed due to the production process of the crosslinked expanded beads. The crosslinked expanded beads of the present invention has a crystal structure such that the heat of melting of the high temperature peak $P_b$ (B) accounts for 10 to 60% of the total heat of melting.

The crosslinked expanded beads of the present invention have a content of a fraction insoluble in hot xylene of 10 to 40 wt%.

The content of the fraction insoluble in hot xylene is one of the measures indicating the crosslinking state of the TPO forming the crosslinked expanded beads. Conventionally, when crosslinked expanded beads in which the proportion of a content of the fraction insoluble in hot xylene (sometimes referred to as a percentage of the gel fraction) was low were in-mold molded, it has been possible to make the crosslinked expanded beads fusion-bonded to each other strongly. However, after taking out the resulting molded article from the mold, a terrible sink has been likely to be formed in the molded article, and thus it has been difficult to produce a favorable molded article. A "terrible sink" means a considerable deformation or shrinkage of a molded article such that the shape of the molded article does not recover even after the pressure in the cells of the molded article recovers close to the atmospheric pressure. If a terrible sink is formed in a molded article, a molded article having a desired shape cannot be obtained.

However, when the crosslinked expanded beads of the present invention are in-mold molded, the crosslinked expanded beads can be fusion-bonded to each other strongly without causing a terrible sink in the molded article after taking out it from the mold, even in the case where the proportion of the content of the fraction insoluble in hot xylene is low, and thus a favorable molded article having excellent tensile characteristics can be produced. The reason of this is not clear, but is probably because the crosslinked expanded beads of the present invention have the specific crystal structure described above.

The method for producing the crosslinked expanded beads of the present invention will be described later in detail, but may be as follows. For example, TPO beads are impregnated with a crosslinking agent while heating to thereby crosslink the TPO forming the beads to produce crosslinked TPO beads. Then, heat treatment is carried out by heating the crosslinked TPO beads at a temperature around the melting point of the TPO, and then the crosslinked TPO beads are expanded to thereby produce the crosslinked expanded beads of the present invention. It is considered that because of undergoing such a specific heat treatment, the molecular chain in the TPO easily move, and that thus a high potential crystal with a thick lamella is likely to be formed.

It is considered that because of such a high potential crystal, any terrible sink are not formed after taking out the molded article from the mold, even in the case where the content of the fraction insoluble in hot xylene is low, and that thus a molded article having excellent tensile characteristics can be produced.

The crosslinked expanded beads of the present invention and the method for producing the same will be described in detail below.

[Thermoplastic Olefin Elastomer (TPO)]

The crosslinked expanded beads of the present invention can be obtained by crosslinking the TPO included in base polymer beads (sometimes referred to as beads) and expanding the resulting beads. The base polymer forming the base polymer beads is a TPO or a composition including a TPO.

Examples of the TPO include a mixture containing a propylene resin as a hard segment and an ethylene rubber as a soft segment, and a block copolymer including a polyethylene block as a hard segment and an ethylene/$\alpha$-olefin copolymer block as a soft segment.

For the mixture containing a propylene resin as a hard segment and an ethylene rubber as a soft segment, examples of the propylene resin include a propylene homopolymer and a copolymer of propylene and ethylene or an $\alpha$-olefin having 4 to 8 carbon atoms. Examples of the ethylene rubber include a copolymer of ethylene and an $\alpha$-olefin having 3 to 8 carbon atoms, and a copolymer of ethylene and a non-conjugated diene such as 5-vinyl-2-norbornene, 5-ethylidene-2-norbornene, 5-methylene-2-norbornene, or dicyclopentadiene.

For the block copolymer including a polyethylene block as a hard segment and an ethylene/$\alpha$-olefin copolymer block as a soft segment, examples of the polyethylene block include an ethylene homopolymer and a copolymer of ethylene and an $\alpha$-olefin having 3 to 8 carbon atoms. Examples of the ethylene/$\alpha$-olefin copolymer block include a copolymer block of ethylene and an $\alpha$-olefin having 3 to 20 carbon atoms.

Examples of the $\alpha$-olefin having 3 to 20 carbon atoms to be copolymerized with ethylene include propylene, 1-butene, 1-pentene, 1-hexene, 1-heptene, 1-octene, 1-nonene, 1-decene, 3-methyl-1-butene, and 4-methyl-1-pentene. Among these, propylene, 1-butene, 1-hexene, and 1-octene are preferred, and 1-octene is particularly preferred.

The proportion of the ethylene component included in the polyethylene block is preferably 95 wt% or more, and more preferably 98 wt% or more, based on the weight of the polyethylene block. The proportion of the $\alpha$-olefin component included in the ethylene/$\alpha$-olefin copolymer block is preferably 5 wt% or more, more preferably 10 wt% or more, and even more preferably 15 wt% or more, based on the weight of the ethylene/$\alpha$-olefin copolymer block.

The proportion of the ethylene component included in the polyethylene block and the proportion of the $\alpha$-olefin component included in the ethylene/$\alpha$-olefin copolymer block can be calculated based on data obtained by differential scanning calorimetry (DSC) or nuclear magnetic resonance (NMR).

Commercially available products may be used as the TPO, and examples thereof include "Thermorun" (a trade name, manufactured by Mitsubishi Chemical Corporation), "Milastomer" (a trade name, manufactured by Mitsui Chemicals, Inc.), "Sumitomo TPE" (a trade name, manufactured by Sumitomo Chemical Co., Ltd.), and "INFUSE" (a trade name, manufactured by The Dow Chemical Company).

(Multi-Block Copolymer)

The block copolymer may be of any of a di-block structure, a tri-block structure, and a multi-block structure, and particularly, is preferably of a multi-block structure.

Among the block copolymers having a multi-block structure, a multi-block copolymer of a polyethylene block and an ethylene/$\alpha$-olefin copolymer block (hereinafter, sometimes simply referred to as "multi-block copolymer") is particularly preferable in view of improvement of recoverability at a high temperature. The polyethylene block corresponds to a hard block, and the ethylene/$\alpha$-olefin copolymer block corresponds to a soft block. The hard block and the soft block are preferably arranged in a straight chain form.

Examples of the multi-block copolymer include the copolymer described in JP 2013-64137 A. Examples of the commercially available products of the multi-block copolymer include "INFUSE (registered trademark)" (a trade name, manufactured by The Dow Chemical Company).

As described above, the base polymer forming the base polymer beads is a TPO or a composition including a TPO (hereinafter referred to as "TPO composition").

The TPO composition contains a polymer other than TPOs (hereinafter referred to as "other polymer") in addition to the TPO described above.

Examples of the other polymer include a thermoplastic resin, such as a polyolefin resin (for example, a polyethylene resin, a polypropylene resin, and a polybutene resin) and a polystyrene resin; a thermoplastic elastomer other than TPO (for example, a polybutadiene elastomer; block copolymers of styrene-butadiene, styrene-isoprene, styrene-butadiene-styrene, and styrene-isoprene-styrene; and hydrogenated products thereof).

The content of the other polymer in the TPO composition is preferably 10 parts by weight or less, and more preferably 5 parts by weight or less, per 100 parts by weight of the TPO.

The base polymer forming the base polymer beads particularly preferably consists of a TPO (preferably a multi-block copolymer of a polyethylene block and an ethylene/α-olefin copolymer block, and more preferably a multi-block copolymer of a polyethylene block and an ethylene/α-olefin copolymer block).

The base polymer beads may contain various additives in addition to the base polymer as long as the objects and effects of the present invention are not impaired.

Examples of the various additives include an antioxidant, an ultraviolet absorber, an antistatic agent, a flame retardant, a flame retardant auxiliary, a metal deactivator, a conductive filler, and a foam regulator.

Examples of the foam regulator include inorganic powders, such as zinc borate, talc, calcium carbonate, borax, aluminum hydroxide, silica, zeolite, and carbon, and organic powders, such as a phosphoric acid nucleating agent, a phenol nucleating agent, an amine nucleating agent, and polyethylene fluoride resin powder. The total amount of these additives added is preferably 20 parts by weight or less, more preferably 10 parts by weight or less, and even more preferably 5 parts by weight or less, per 100 parts by weight of the base polymer. These additives are generally used in the requisite minimum amounts. The additives can be incorporated in the base polymer beads in a manner, for example, such that in the production of the base polymer beads, the additives are placed in an extruder together with a base polymer, followed by kneaded them.

(Physical Properties of Thermoplastic Olefin Elastomer (TPO))

[Melt Flow Rate (MFR)]

The melt flow rate (MFR) of the TPO at 190°C under a load of 2.16 kg is preferably 2 to 10 g/10 min, more preferably 3 to 8 g/10 min, and even more preferably 4 to 7 g/10 min.

When the melt flow rate of the TPO is 2 g/10 min or more, the crosslinked expanded beads are likely to be fusion-bonded to each other upon in-mold molding. When the melt flow rate of the TPO is 10 g/10 min or less, a molded article of expanded beads obtained by in-mold molding the crosslinked expanded beads is excellent in recoverability.

The melt flow rate of the TPO is a value measured according to JIS K7210-1:2014 under conditions of a temperature of 190°C and a load of 2.16 kg.

[Type A Durometer Hardness (Shore A Hardness)]

The type A durometer hardness (generally, also referred to as "Shore A hardness") of the TPO is 65 to 90, preferably 75 to 90, and more preferably 76 to 88.

When the type A durometer hardness of the TPO is 65 or more, the dimensional recoverability of the molded article of the expanded beads obtained by in-mold molding the crosslinked expanded beads is unlikely to be impaired. When the type A durometer hardness of the TPO is 90 or less, a molded article of the expanded beads excellent in flexibility is likely to be obtained.

The type A durometer hardness of the TPO is a durometer hardness as measured using a type A durometer according to ASTM D2240-05. When a durometer hardness is measured, a durometer is pressed on and adhered to the surface of a measurement sample, and within one second thereafter, the maximum value indicated by the durometer is read.

[Density, Melting Point]

The density of the TPO is preferably 700 to 1000 $kg/m^3$, and more preferably 800 to 900 $kg/m^3$.

The melting point of the TPO is preferably 110 to 130°C, and more preferably 115 to 125°C.

When the melting point of the TPO is in the range described above, the compression set at 50°C can be low.

The melting point of the TPO means a melting peak temperature as measured by the heat flux differential scanning calorimetry described in JIS K7121-1987. For the conditioning of the specimen, the contents of "(2) the case where the melting temperature is measured after a prescribed heat treatment" is adopted. The heating rate and the cooling rate are each 10°C/min. When the DSC curve exhibits a plurality of melting peaks, the peak temperature of the melting peak having the largest area is taken as the melting point.

[Flexural Modulus]

The flexural modulus of the TPO is preferably 10 to 30 MPa, and more preferably 12 to 30 MPa.

The flexural modulus of the TPO is measured according to the measurement method described in JIS K7171:2008.

[Crosslinked Expanded Beads]

The crosslinked expanded beads of the present invention are obtained by crosslinking the TPO included in the base polymer beads described above, and expanding the resulting beads. Details of the crosslink and expansion of the TPO included in the base polymer beads will be described later.

(Content of Fraction Insoluble in Hot Xylene)

The crosslinked expanded beads of the present invention have a content of a fraction insoluble in hot xylene (a content of a fraction insoluble in xylene according to the hot xylene extraction method) of 10 to 40 wt%.

As described above, the crosslinked expanded beads of the present invention have a crystal structure such that, in the above-described DSC curve, the total heat of melting is 40 to 60 J/g, and that the ratio of the heat of melting of the high temperature peak to the total heat of melting is 0.15 to 0.6. Therefore, a molded article of expanded beads can be produced without causing a terrible sink after in-mold molding, even in the case where the proportion of the content of the fraction insoluble in hot xylene of the crosslinked expanded beads is low. Also, a favorable molded article of expanded beads can be produced even under a lower molding pressure than ever.

If the proportion of the content of a fraction insoluble in hot xylene in crosslinked expanded beads having such a high temperature peak is too high, secondary expansion of the crosslinked expanded beads is suppressed when heating upon in-mold molding, and therefore it is difficult to strongly fusion-bond the crosslinked expanded beads to each other. In view of this, the crosslinked expanded beads have a content of a fraction insoluble in hot xylene of 40 wt% or less, and preferably less than 30 wt%. On the other hand, even crosslinked expanded beads showing a high temperature peak described above may bring about a terrible sink after in-mold molding if the proportion of the content of a fraction insoluble in hot xylene is too low. In view of this, the crosslinked expanded beads have a content of a fraction insoluble in hot xylene of 10 wt% or more, and preferably 15 wt% or more.

The content of a fraction insoluble in hot xylene can be determined in the following manner. The sample weighed in an amount of approximately 1 g (the weight of the sample weighed is designated as G1 (g)) is boiled in 100 g of xylene for 6 hours, and then the resultant is immediately filtered through a 100-mesh metallic mesh. Subsequently, the content of the fraction insoluble in boiling xylene remaining on the metallic mesh is dried in a drying oven at 80°C under reduced pressure for 8 hours, and then the dried fraction insoluble in boiling xylene is weighed (the weight of the content of the fraction insoluble in boiling xylene weighed is designated as G2 (g)). The content of the fraction insoluble in hot xylene is obtained according to the following Expression (1).

$$\text{Content of fraction insoluble in hot xylene (wt\%)} = [G2 \text{ (g)}/G1 \text{ (g)}] \times 100$$

$$(1)$$

The content of a fraction insoluble in hot xylene in the crosslinked expanded beads can be controlled by, for example, the amount of a crosslinking agent added as well as the conditions of stirring and the conditions of temperature rise when crosslinking the TPO included in the base polymer beads in a closed vessel, in a process for producing the crosslinked expanded beads described later.

(Crystal Structure)

As described with reference to Fig. 1, the crosslinked expanded beads of the present invention have a crystal structure such that a melting peak inherent in the TPO $P_a$ (inherent peak $P_a$) and one or more melting peaks $P_b$ on a higher temperature side than the inherent peak $P_a$ (high temperature peak $P_b$) appear on a DSC curve obtained by heating the crosslinked expanded beads from 23°C to 200°C at a heating rate of 10°C/min. In the DSC curve, a total heat of melting [(A) + (B)] is 40 to 60 J/g, and a ratio of a heat of melting of the high temperature peak (B) to the total heat of melting [(A) + (B)], i.e., [(B)/[(A) + (B)]] is 0.1 to 0.6.

Since the total heat of melting [(A) + (B)] is 40 J/g or more, an adequate amount of the hard segment is present in the TPO in the crosslinked expanded beads of the present invention, and therefore cells are unlikely to break upon in-mold molding, thereby making it possible to obtain a favorable molded article of the crosslinked beads. On the other hand, when the total heat of melting is 60 J/g or less, the crosslinked expanded beads have flexibility. In view of these, the total heat of melting [(A) + (B)] is preferably 45 to 57 J/g, more preferably 50 to 55 J/g, and even more preferably 51 to 54 J/g.

Since the crosslinked expanded beads of the present invention have a crystal structure such that the ratio of the heat of melting of the high temperature peak to the total heat of melting [(B)/[(A) + (B)]] is 0.1 or more, a terrible sink is unlikely to be formed in a molded article of the expanded beads obtained. When the ratio [(B)/[(A) + (B)]] is 0.6 or less, a molded article of the expanded beads having a favorable surface property can be obtained. In view of difficulty in the formation of a terrible sink in a molded article of expanded beads, the ratio [(B)/[(A) + (B)]] is 0.15 or more, preferably 0.17 or more, and more preferably 0.20 or more. On the other hand, in view of easily obtaining a molded article of the expanded beads having excellent fusion bond between the expanded beads even under a lower molding pressure, the ratio [(B)/[(A) + (B)]] is preferably 0.5 or less.

The difference between the melting peak temperature of the high temperature peak and that of the inherent peak is preferably 1 to 10°C, and more preferably 3 to 8°C.

The total heat of melting of the crosslinked expanded beads depends on the type of the thermoplastic olefin elastomer (TPO) used as a raw material. The ratio of the heat of melting of the high temperature peak to the total heat of melting can be controlled by adjusting the conditions especially in step (D) (crystallization step) among steps (A) to (E) included in the method for producing the crosslinked expanded beads described later.

(Average Value of Cell Diameter)

The average value of cell diameter of the crosslinked expanded beads of the present invention is 30 to 150 $\mu$m.

When the average value of the cell diameter of the crosslinked expanded beads is in the range described above, cells are more unlikely to break upon in-mold molding, and the crosslinked expanded beads can also be fusion-bonded to each other more strongly, thereby obtaining a favorable molded article of the expanded beads.

The average value of the cell diameter of the crosslinked expanded beads is preferably 40 to 140 $\mu$m, and more preferably 50 to 130 $\mu$m.

The average value of the cell diameter of the crosslinked expanded beads can be determined in the following manner. A crosslinked expanded bead is divided into almost equal two portions by a plane passing through the center of the crosslinked expanded bead, and a photo of the cross section thereof is taken using a scanning electron microscope.

In the photo of the cross section obtained, 50 or more cells on the cross section of the crosslinked expanded bead are arbitrarily selected. The area of the cross section of each cell is measured using an image analysis software or the like, and the diameter of a virtual true circle having the same area as that of the cell is taken as the cell diameter. This operation is carried out for at least ten crosslinked expanded beads, and the arithmetic average value of the cell diameter of the cells is taken as the average value of the cell diameter (the average cell diameter) of the crosslinked expanded beads.

The average cell diameter of the crosslinked expanded beads can be controlled by any of conventionally known methods, including adjusting the amount of the blowing agent, the expanding conditions, the amount of the cell controlling agent blended, and other conditions.

(Coefficient of Variance of Cell Diameter)

The coefficient of variance of the cell diameter of the crosslinked expanded beads of the present invention is 20% or less.

When the coefficient of variance of the cell diameter of the crosslinked expanded beads is small, such expanded beads are highly excellent in in-mold moldability.

The coefficient of variance of the cell diameter of the crosslinked expanded beads can be determined by dividing the standard deviation of the cell diameter of cells in the crosslinked expanded beads by the average cell diameter of the cells in the crosslinked expanded beads. The value of the standard deviation is a value given by the square root of the unbiased variance.

The coefficient of variance of the cell diameter of the crosslinked expanded beads tends to be small due to the crystal structure thereof exhibiting a high temperature peak. It is considered that high potential crystals of the TPO are formed uniformly in the base polymer beads through the crystallizing step, and that the high potential crystals serve as bubble nuclei in the expanding step to result in making the coefficient of variance of the cell diameter of the crosslinked expanded beads small.

The average bead diameter of the crosslinked expanded beads of the present invention is preferably 0.5 to 10 mm, more preferably 1 to 8 mm, and even more preferably 2 to 5 mm.

When the average bead diameter of the crosslinked expanded beads is in the range described above, the production of the crosslinked expanded beads is easy and also it is easy to fill the crosslinked expanded beads into a mold for in-mold molding of the crosslinked expanded beads.

The average bead diameter of the crosslinked expanded beads can be controlled by, for example, adjusting the diameter of the base polymer beads and the conditions for expansion, such as the amount of a blowing agent, the temperature for expansion, and the pressure for expansion.

The apparent density of the crosslinked expanded beads of the present invention is preferably 30 to 300 kg/m$^3$,

more preferably 60 to 260 kg/m$^3$, and even more preferably 100 to 210 kg/m$^3$.

When the apparent density of the crosslinked expanded beads is in the range described above, a molded article of the expanded beads particularly excellent in the lightweight property, flexibility, and rebound characteristics can be obtained by in-mold molding of the crosslinked expanded beads.

The average bead diameter and the apparent density of the crosslinked expanded beads can be measured in the following manner. First, a group of the crosslinked expanded beads are left to stand under the conditions of a relative humidity of 50%, a temperature of 23°C, and a pressure of 1 atm for 2 days. Subsequently, a measuring cylinder containing water at a temperature of 23°C is provided, and an arbitrary amount of the group of the crosslinked expanded beads (the weight of the group of the crosslinked expanded beads: W1) that have been left to stand for 2 days are immersed in water in the measuring cylinder with a tool, such as a metallic mesh. The volume V1 [L] of the group of the crosslinked expanded beads is measured by reading the elevation of the water level while taking the volume of the tool, such as a metallic mesh, into consideration. The volume V1 is divided by the number (N) of the crosslinked expanded beads placed in the measuring cylinder to calculate the average volume per one crosslinked expanded bead (V1/N). The diameter of the virtual true sphere that has the same volume as the resulting average volume is taken as the average bead diameter [mm] of the crosslinked expanded beads. The weight W1 (g) of the group of the crosslinked expanded beads placed in the measuring cylinder is divided by the volume V1 [L] (W1/V1), followed by unit conversion, to determine the apparent density [kg/m$^3$] of the crosslinked expanded beads.

An anionic surfactant may be attached to the surface of the crosslinked expanded beads of the present invention to thereby enhance the fusion bondability of the crosslinked expanded beads in in-mold molding.

Examples of the anionic surfactant include a carboxylic acid type, a sulfonic acid type, a sulfate ester type, a phosphate ester type, and a polymer type. Among the anionic surfactants, an alkanesulfonate salt, a polyacrylate salt, or a salt of a polyacrylic acid-sulfonic acid copolymer is preferably attached to the surface of the crosslinked expanded beads, since the crosslinked expanded beads that are particularly excellent in the effect of enhancing the fusion bondability in in-mold molding can be obtained. The anionic surfactants may be used singly or in combinations of two or more as a mixture.

The amount of the anionic surfactant attached per unit surface area of the crosslinked expanded beads is preferably 2 mg/m$^2$ or more, more preferably 5 mg/m$^2$ or more, and even more preferably 20 mg/m$^2$ or more. For the upper limit, the amount attached may be approximately 100 mg/m$^2$ or less.

The amount of the anionic surfactant attached to the crosslinked expanded beads may be calculated on the basis of a value measured using a TOC (Total Organic Carbon) measuring device. TOC may be measured according to a TC-IC method using, for example, Total Organic Carbon Analyzer TOC-V$_{CSH}$ manufactured by Shimadzu Corporation.

<Method for Producing Crosslinked Expanded Beads>

The method for producing the crosslinked expanded beads of the present invention is not particularly limited as long as it can control the crosslinked expanded beads so as to have a content of a fraction insoluble in hot xylene of 10 to 40 wt% and have a crystal structure such that in the DSC curve the total heat of melting is 40 to 60 J/g and that the ratio of the heat of melting of the high temperature peak to the total heat of melting is 0.15 to 0.6.

However, in view of easily producing crosslinked expanded beads having such characteristics, the crosslinked expanded beads of the present invention is preferably produced according to the production method including the steps below.

Specifically, the method for producing the crosslinked expanded beads of the present invention preferably includes the following step (A), step (B), step (C), step (D), and step (E).

Step (A): dispersing step of dispersing base polymer beads including the TPO and a crosslinking agent in a dispersion medium in a closed vessel;

Step (B): crosslinking step of heating the inside of the closed vessel to a temperature equal to or higher than the temperature at which the base polymer beads becomes softened to impregnate the base polymer beads with the crosslinking agent and heating to a temperature that is equal to or higher than the melting point of the TPO and at which the crosslinking agent is substantially decomposed (sometimes referred to as "crosslinking temperature") to crosslink the TPO, thereby obtaining crosslinked base polymer beads;

Step (C): blowing agent -impregnating step of impregnating the base polymer beads or the crosslinked base polymer beads with a blowing agent:

Step (D): crystallizing step of keeping the inside of the closed vessel at a temperature around the melting point of the TPO to recrystallize part of the crystal of the melting TPO in the crosslinked base polymer beads, thereby forming a high potential crystal; and

Step (E): expanding step of discharging the crosslinked base polymer beads impregnated with the blowing agent together with the dispersing medium to an atmosphere at a pressure lower than that in the closed vessel and a temperature around the melting point of the TPO to foam and expand the crosslinked base polymer beads, thereby producing crosslinked expanded beads.

It is preferable to allow step (A) to step (D) to proceed while stirring the contents of the closed vessel.

Particularly, step (B) is preferably a crosslinking/spheronising step of spheronising the crosslinked base polymer beads by allowing the step to proceed while stirring the base polymer beads.

When the crosslinked expanded beads of the present invention thus spheronised is used to produce a molded article of the expanded beads, the crosslinked expanded beads are successfully filled into a mold to easily obtain a molded article of the expanded beads with the uniform physical property.

1. Step (A) (Dispersing Step)

In step (A), base polymer beads including the TPO and a crosslinking agent are dispersed in a dispersion medium in a closed vessel.

(Production of Base Polymer Beads)

The base polymer beads including the TPO can be produced according to a known granulation method.

The method for producing the base polymer beads is not particularly limited, and may be, for example, a strand cutting method that includes feeding the base polymer including the TPO and additives such as a cell controlling agent if needed to an extruder, kneading them while melting the base polymer to form a molten kneaded material, extruding the molten kneaded material into a strand form through a small hole(s) of a die attached to an extruder, cooling the strand with water, and then cutting the strand to obtain base polymer beads. Alternatively, the base polymer beads can be obtained by a hot cutting method, in which the molten kneaded material is cut in a gas phase immediately after extruding the molten kneaded material through a small hole(s); an underwater cutting method, in which the molten kneaded material is cut in water; or other methods.

The average weight per base polymer bead is preferably 0.01 to 10 mg, and more preferably 0.1 to 5 mg. The average weight of the base polymer beads is a value that is obtained by dividing the total weight (mg) of 100 base polymer beads arbitrarily selected by 100.

(Dispersion Medium)

The dispersion medium used in step (A) is not particularly limited as long as the dispersion medium does not dissolve the base polymer beads. Examples of the dispersion medium include water, ethylene glycol, glycerin, methanol, and ethanol. The dispersion medium is preferably water.

It is preferable that when the base polymer beads are dispersed in the dispersion medium, the base polymer beads be dispersed while stirring the dispersion medium using an agitator.

In step (A), a dispersant may be added to the dispersion medium.

Examples of the dispersant include polyvinyl alcohol, polyvinylpyrrolidone, methyl cellulose, aluminum oxide, zinc oxide, kaolin, mica, magnesium phosphate, and tricalcium phosphate.

A surfactant may also be added to the dispersion medium.

Examples of the surfactant include sodium oleate, sodium dodecylbenzenesulfonate, sodium alkylbenzenesulfonate, and other anionic surfactants and nonionic surfactants that are generally used for suspension polymerization.

A pH regulator may also be added to the dispersion medium to regulate the pH of the dispersion medium.

Examples of the pH regulator include carbon dioxide.

A blowing agent may also be added to the dispersion medium. Details of the blowing agent will be described in the description for step (C).

(Closed Vessel)

The closed vessel used in step (A) is not particularly limited, as long as the vessel can be closed air-tightly. The inside of the closed vessel is heated to increase the pressure inside the closed vessel in step (B) described later, and therefore it is necessary for the closed vessel to withstand heating and the pressure increase in the step (B). Examples of the closed vessel include an autoclave.

(Crosslinking Agent)

A crosslinking agent is used in order to crosslink the TPO included in the base polymer beads.

The crosslinking agent may be added to the dispersion medium in advance. Alternatively, after dispersing the base polymer beads in the dispersion medium, the crosslinking agent may be added thereto.

The crosslinking agent is not particularly limited, as long as the crosslinking agent can crosslink the TPO. A conventionally known organic peroxide can be used as the crosslinking agent, including a percumyl compound, such as dicumyl peroxide and tert-butylcumyl peroxide; a perbutyl compound, such as 1,1-bis (tert-butylperoxy)-3,3,5-trimethylcyclohexane, 2,5-dimethyl-2,5-di(tert-butylperoxy)hexane, and di-tert-butyl peroxide; a perhexyl compound such as tert-hexylperoxybenzoate; and a perocta compound such as 1,1,3,3-tetramethylbutylperoxy-2-ethylhexanoate. Among these, a percumyl compound and a perbutyl compound are preferable, a percumyl compound is more preferable, and particularly dicumyl peroxide is preferable. These compounds may be used singly or in combinations of two or more thereof. Among the above, preferably used is a crosslinking agent that exhibits a 10-hour half-life temperature in the range of Tm - 45°C to Tm + 20°C, more preferably Tm - 40°C to Tm + 10°C, wherein Tm represents the melting point of the TPO as a raw material. By using a crosslinking agent that exhibits a half-life temperature in such a range, the content of a fraction insoluble in hot xylene in the crosslinked expanded beads is easily controlled in the range described above (10 to 40 wt%).

The amount of the crosslinking agent blended to the dispersing medium is preferably 0.2 to 1.0 part by weight, more preferably 0.3 to 0.9 parts by weight, and even more preferably 0.4 to 0.8 parts by weight, per 100 parts by weight of the base polymer beads. When the amount of the crosslinking agent blended is in the range described above, the crosslinking efficiency is improved to thereby easily obtain crosslinked expanded beads having an appropriate content of the fraction insoluble in hot xylene (percentage of the gel fraction).

2. Step (B) (Crosslinking Step)

In step (B), the inside of the sealable vessel is heated to a temperature equal to or higher than the softening point of the base polymer beads to impregnate the base polymer beads with the crosslinking agent, and heated to a temperature that is equal to or higher than the melting point of the TPO and at which the crosslinking agent is substantially decomposed (sometimes referred to as "crosslinking temperature") to crosslink the TPO.

In step (B), (1) after impregnating the base polymer beads with the crosslinking agent, the crosslinking agent may be decomposed to crosslink the TPO; or (2) while impregnating the base polymer beads with the crosslinking agent, the crosslinking agent may be decomposed to crosslink the TPO.

In case (1), the base polymer beads is impregnated with the crosslinking agent preferably at a temperature at which the crosslinking agent is not substantially decomposed, that is, which is a temperature lower than a temperature at which the crosslinking of the TPO included in the base polymer beads starts, and at which the base polymer beads can be impregnated with the crosslinking agent (sometimes referred to as "impregnating temperature"). Specifically, for the impregnating temperature, the temperature of the inside of the closed vessel is preferably in the range of Tm - 20°C to the 10-hour half-life temperature of the crosslinking agent, wherein Tm represents the melting point of the TPO as a raw material. When two or more crosslinking agents are used, the impregnating temperature is set based on the lowest temperature among the 10-hour half-life temperatures thereof. The keeping time at the impregnating temperature is preferably 5 to 90 minutes, and more preferably 10 to 60 minutes.

Then, the inside of the closed vessel is heated to a temperature that is equal to or higher than the melting point of the TPO and at which the crosslinking agent is substantially decomposed (crosslinking temperature), and the crosslinking temperature is kept to crosslink the TPO included in the base polymer beads. Specifically, for the crosslinking temperature, the temperature of the inside of the closed vessel is preferably Tm to Tm + 80°C, and more preferably Tm + 10°C to Tm + 60°C, wherein Tm represents the melting temperature of the TPO as a raw material. The keeping time at the crosslinking temperature is preferably 15 to 60 minutes. The temperature at which the crosslinking agent is substantially decomposed means a temperature of the one-minute half-life temperature of the crosslinking agent - 20°C or more.

In case (2), the inside of the closed vessel is preferably heated to the crosslinking temperature at an almost constant rate of temperature rise and kept at the crosslinking temperature for a certain time, to thereby decompose the crosslinking agent to crosslink the TPO while impregnating the base polymer beads with the crosslinking agent. If the rate of temperature rise is too fast, crosslinking of the TPO starts before the crosslinking agent penetrates the middle of the base polymer bead, and therefore, the rate of temperature rise is preferably 0.5°C/min to 5°C/min, and more preferably 1°C/min to 4°C/min. When the rate of temperature rise is in the range described above, a lack of uniformity of crosslinking of the TPO included in the base polymer beads can be prevented. For the crosslinking temperature, the temperature of the inside of the closed vessel is preferably Tm to Tm + 80°C, and more preferably Tm + 20°C to Tm + 60°C, wherein Tm represents the melting point of the TPO as a raw material. The keeping time at the crosslinking temperature is preferably 5 to 120 minutes, and more preferably 10 to 90 minutes.

Crosslinking of the TPO may be conducted under the combined conditions of cases (1) and (2).

Furthermore, when at least step (B) is allowed to proceed in the closed vessel while stirring the contents of the vessel including the base polymer beads, crosslinked base polymer beads obtained are easily spheronised while the crosslink of the TPO included in the base polymer beads sufficiently proceeds. The contents of the vessel are preferably stirred in steps (A) and (B), and may also be stirred in step (C) and/or step (D).

3. Step (C) (Blowing agent -Impregnating Step)

In step (C), the base polymer beads or the crosslinked base polymer beads are impregnated with a blowing agent.

Step (C) may be carried out at any timing before step (E). Specifically, step (C) may be carried out at any timing of during step (A), after step (A) and before step (B), during step (B), after step (B) and before step (D), during step (D), or after step (D) and before step (E), and may also be carried out at two or more timings thereof.

Thus, the base polymer beads are impregnated with the blowing agent, in the case where the timing is before the crosslinking of the TPO; the base polymer beads in which the crosslinking is proceeding are impregnated with the blowing agent, in the case where the timing is during the crosslinking of the TPO in progress; and the crosslinked base polymer beads are impregnated with the blowing agent, in the case where the timing is after the crosslinking of the TPO.

(Blowing agent)

The blowing agent used in step (C) is not particularly limited, as long as the blowing agent can expand the crosslinked base polymer beads. Examples of the blowing agent include an inorganic physical blowing agent, such as air, nitrogen, carbon dioxide, argon, helium, oxygen, and neon, and an organic physical blowing agent, such as an aliphatic hydrocarbon, e.g., propane, n-butane, isobutane, n-pentane, isopentane, and n-hexane, an alicyclic hydrocarbon, e.g., cyclohexane and cyclopentane, a halogenated hydrocarbon, e.g., chlorofluoromethane, trifluoromethane, 1,1-difluoroethane, 1,1,1,2-tetrafluoroethane, methyl chloride, ethyl chloride, and methylene chloride, and a dialkyl ether, e.g., dimethyl ether, diethyl ether, and methyl ethyl ether. Among these, an inorganic physical blowing agent is preferred since it does not deplete the ozone layer and is inexpensive. Nitrogen, air, and carbon dioxide are more preferred, and carbon dioxide is particularly preferred. These blowing agents may be used singly or in combinations of two or more thereof.

As described later, when the blowing agent is added to the contents of the closed vessel, the amount of the blowing agent blended is determined in consideration of the intended apparent density of the crosslinked expanded beads, the type of the TPO, the type of the blowing agent, and others, and is generally preferably 5 to 50 parts by weight for the organic physical blowing agent and preferably 0.5 to 30 parts by weight for the inorganic physical blowing agent, per 100 parts by weight of the base polymer beads or the crosslinked base polymer beads.

(Method for Impregnation)

The method for impregnating the base polymer beads or the crosslinked base polymer beads with the blowing agent is not particularly limited, and for example, the blowing agent is added to the contents of the closed vessel to impregnate either of the softened base polymer beads or the softened crosslinked base polymer beads or both of them with the blowing agent. Preferably, the blowing agent -impregnating step is allowed to proceed while stirring the contents of the closed vessel including either of the base polymer beads or the crosslinked base polymer beads or both of them in the closed vessel.

The temperature for impregnating with the blowing agent is not particularly limited, as long as it is a temperature equal to or higher than the temperature at which the base polymer beads or the crosslinked base polymer beads becomes softened. For example, the temperature for impregnation is preferably in the range of Tm - 20°C to Tm + 80°C, wherein Tm represents the melting point of the TPO as a raw material.

4. Step (D) (Crystallizing Step)

In step (D), the inside of the sealable vessel is kept at a temperature around the melting point of the TPO to recrystallize part of the crystal of the melting TPO in the crosslinked base polymer beads, thereby forming a high potential crystal.

In step (D), after step (B), (1) the inside of the closed vessel may be cooled from the crosslinking temperature in step (B) to a temperature around the melting point of the TPO, or (2) after the contents of the sealable vessel are cooled, the crosslinked base polymer beads are taken out from the closed vessel, and then dispersed in a dispersing medium in a closed vessel, followed by heating the inside of a closed vessel to a temperature around the melting point of the TPO.

In case (1), preferably, the contents of the closed vessel after step (B) are cooled from the crosslinking temperature in step (B) to a temperature around the melting point of the TPO at an almost constant rate of temperature fall and then kept at this temperature (crystallizing temperature) for a certain time. The rate of temperature fall from the crosslinking temperature (rate of temperature fall) is preferably 0.3°C/min to 5°C/min, and more preferably 0.5°C/min to 3°C/min.

In case (2), preferably, after the contents of the closed vessel after step (B) are cooled to a predetermined temperature, the crosslinked base polymer beads are taken out from the closed vessel and then dispersed in a dispersing medium in a closed vessel, and the contents of the closed vessel are heated to a temperature around the melting point of the TPO at an almost constant rate of temperature rise, followed by keeping the contents of the closed vessel at this temperature (crystallizing temperature) for a certain time. The rate of temperature rise to the temperature around the melting point of the TPO (rate of temperature rise) is preferably 0.3°C/min to 5°C/min, and more preferably 0.5°C/min to 3°C/min.

When step (D) is carried out as in case (1) or (2) described above, part of the crystal of the melting TPO in the crosslinked base polymer beads is easily recrystallized, thereby forming a high potential crystal having a thick lamella. When crosslinked base polymer beads having such a high potential crystal are expanded in the next step (E), crosslinked expanded beads that have a crystal structure including a crystal formed by cooling on expansion as well as the high potential crystal can be obtained. Thus, an inherent peak and a high temperature peak are exhibited in the DSC curve.

The crystallizing temperature for forming a high potential crystal is preferably in the range of Tm - 15°C to the temperature of the completion of melting, wherein Tm represents the melting point of the TPO as a raw material. Crystallizing may be carried out at a constant temperature or may be carried out while the temperature varies within the temperature range described above.

The crystallizing temperature in step (D) as in case (1) or (2) is preferably kept for a certain time. The time for keeping the crystallizing temperature is preferably 1 to 60 minutes, and more preferably 5 to 45 minutes.

As the crystallizing temperature is higher, the peak melting temperature of the melting peak (high temperature peak) appearing on a higher temperature side than the inherent peak tends to be lower. As the time for keeping the crystallizing temperature is longer, the heat of melting at the high temperature peak tends to be larger.

As the amount where the blowing agent penetrating in the crosslinked beads is smaller in step (D), the heat of melting at the high temperature peak tends to be larger in the same crystallizing conditions (the crystallizing temperature and the keeping time thereof).

The melting point Tm of the TPO as a raw material and the temperature of the completion of melting mean a melting peak temperature and an extrapolated end temperature of melting, respectively, as measured according to the heat flux differential scanning calorimetry described in JIS K7121-1987. The content of "(2) the case where the melting temperature is measured after a prescribed heat treatment" is applied for the conditioning of the specimen, and the heating rate and the cooling rate are both 10°C/min.

5. Step (E) (Expanding Step)

In step (E), the crosslinked base polymer beads are expanded to thereby produce crosslinked expanded beads.

Specifically, the crosslinked base polymer beads having been impregnated with the blowing agent in step (C) (sometimes referred to as "expandable crosslinked beads") are preferably discharged together with the dispersing medium to an atmosphere at a pressure lower than the pressure in the closed vessel to foam and expand the expandable crosslinked beads, thereby preparing crosslinked expanded beads.

The temperature of the contents of the closed vessel when discharging is preferably the same as the crystallizing temperature in step (D), in order to obtain crosslinked expanded beads having a crystal structure such that a high temperature peak appears. The difference between the pressure in the closed vessel and the pressure of the atmosphere is preferably 1.0 to 10 MPa, and more preferably 1.5 to 5.0 MPa.

When the expandable crosslinked beads are discharged together with the dispersing medium from the closed vessel to an atmosphere at a pressure lower than the pressure in the closed vessel, the inside of the vessel is preferably pressurized with carbon dioxide, or air to control the pressure in the opened closed vessel so as to keep a constant pressure or gradually increase the pressure. Such a pressure control can reduce unevenness of the apparent density and the cell diameter of the crosslinked expanded beads obtained.

The crosslinked expanded beads obtained through steps (A) to (E) have a crystal structure such that a melting peak inherent in the TPO (inherent peak) and one or more melting peaks on a higher temperature side than the inherent peak (high temperature peak) appear on a DSC curve obtained by heating the crosslinked expanded beads from 23°C to 200°C at a heating rate of 10°C/min. The high temperature peak appears on the DSC curve obtained in the first heating of the crosslinked expanded beads, but does not appear on a DSC curve obtained in the second heating, the DSC curve being obtained by cooling the crosslinked expanded beads after the first heating from 200°C to 23°C at a cooling rate of 10°C/min and again heating the crosslinked expanded beads from 23°C to 200°C at a heating rate of 10°C/min. Only an endothermic peak similar to the inherent peak appears on the DSC curve obtained in the second heating, the inherent peak and the high temperature peak are thus easily distinguished.

<Molded Article of Expanded Beads>

A molded article of the expanded beads can be obtained by subjecting the crosslinked expanded beads of the present invention to in-mold molding. Since the crosslinked expanded beads of the present invention have the above-described characteristics, the crosslinked expanded beads are excellent in in-mold moldability, and a molded article of the expanded beads obtained from the crosslinked expanded beads are excellent in tensile characteristics.

(In-Mold Molding)

A molded article of the expanded beads can be obtained by filling the crosslinked expanded beads in a mold, and heat-molding the beads with a heating medium, such as steam, according to a conventionally known method. Specifically, a molded article of the expanded beads can be obtained in the following manner: the crosslinked expanded beads are filled in a mold, and then a heating medium, such as steam, is introduced into the mold to heat the crosslinked expanded beads for the secondary expansion while fusion-bonding the crosslinked expanded beads to each other, thereby obtaining a molded article of the expanded beads having the shape of the molding cavity. As the method for filling the crosslinked expanded beads in a molding die, a known method therefor may be adopted. The following methods may also be adopted: a predetermined inner pressure is given to the crosslinked expanded beads by, for example, pressurizing the crosslinked expanded beads with a pressurized gas, and then the crosslinked expanded beads are filled in a molding die (filling under pressure); the crosslinked expanded beads compressed with a pressurized gas are filled in a mold under a pressure, followed by a pressure release of the molding die (filling under compression); and a mold is opened in advance to widen the molding cavity before filling the crosslinked expanded beads in the mold, and after filling, the mold is closed to mechanically compress the crosslinked expanded beads (crack-filling); and these methods may be combined. These filling methods are performed at a level such that the capability for the secondary expansion of the crosslinked expanded beads is not excessively increased.

(Density of Molded Article)

The density of the molded article is preferably 50 to 200 kg/m$^3$, more preferably 80 to 180 kg/m$^3$, and even more preferably 90 to 160 kg/m$^3$. When the density of the molded article is in the range described above, the molded article has good tensile characteristics.

The density (kg/m$^3$) of the molded article can be determined by dividing the weight W (kg) of the molded article by the volume V (m$^3$) thereof obtained from the external dimensions of the molded article (W/V).

(Tensile Characteristics of Molded Article)

The molded article of the expanded beads preferably has the following tensile characteristics when the molded article is subjected to a tensile test according to JIS K6767:1999.

The molded article of the expanded beads preferably has a tensile strength of 0.49 to 1.5 MPa, more preferably 0.50 to 1.5 MPa, even more preferably 0.55 to 1.3 MPa, and still more preferably 0.60 to 1.1 MPa.

The molded article of the expanded beads preferably has a tensile elongation of 200 to 370%, and more preferably 250 to 340%.

When the tensile strength and the tensile elongation of the molded article of the expanded beads are in the respective ranges described above, the molded article has excellent strength as well as flexibility, and therefore is suitable for applications, such as a seat cushion material, a pad material for sports, and a sole material.

Examples

The present invention will be described in further details by way of examples, but the present invention is in no way limited thereby.

<Thermoplastic Olefin Elastomer (TPO, Base Polymer)>

As a base polymer, a thermoplastic olefin elastomer was used which was a multi-block copolymer including a polyethylene as a hard block and an ethylene/α-olefin copolymer as a soft block ("INFUSE (registered trademark) 9530", manufactured by The Dow Chemical Company (designated as "TPO 1" in Tables 1 and 3).

The TPO had a density of 887 kg/m³, a type A durometer hardness of 86, a melt flow rate of 5.4 g/10 min, a melting point of 117°C, and a temperature of the completion of melting of 121°C.

[Physical Properties of TPO]

(Density, Shore A Hardness, and Melt Flow Rate)

The density of the TPO was measured according to ASTM D792-13.

The type A durometer hardness (shore A hardness) of the TPO was measured according to ASTM D2240-05.

The melt flow rate of the TPO was measured according to JIS K7210-1:2014 under conditions of a temperature of 190°C and a load of 2.16 kg.

(Melting Point)

The peak melting temperature and the temperature of the completion of melting of the TPO were determined according to JIS K7121-1987. Specifically, the melting peak temperature (melting point) and the temperature of the completion of melting of the TPO were measured on about 5 mg of the TPO pellet as a specimen by the heat flux differential scanning calorimetry under the conditions of a heating rate of 10°C/min, a cooling rate of 10°C/min, and a nitrogen flow rate of 30 mL/min as well as adopting the contents of "(2) the case where the melting temperature is measured after a prescribed heat treatment" for the conditioning of the specimen. A heat flux differential scanning calorimeter (manufactured by SII Nano Technology Inc., model number: DSC7020) was used as a measurement device.

<Preparation of Crosslinked Expanded Beads and Molded Article of Expanded Beads>

Next, the method for preparing crosslinked expanded beads and molded articles of the expanded beads according to Examples and Comparative Examples will be described. Crosslinked expanded beads and molded articles of expanded beads were prepared in the conditions shown below (see Tables 1 and 3).

[Preparation of Base Polymer Beads]

The TPO as a base polymer and 0.1 parts by weight of zinc borate powder ("Zinc Borate 2335", manufactured by Tomita Pharmaceutical Co., Ltd.) as a cell controlling agent based on 100 parts by weight of the TPO were fed to an extruder and kneaded while melting the TPO. The resultant was extruded through a die having a hole diameter of 2 mm into a strand, and the strand was cooled in water and cut using a pelletizer so as to satisfy an average bead weight of about 5 mg and a shape ratio L/D of 1.5, thereby obtaining base polymer beads.

The "shape ratio L/D" is a ratio of the maximum length of the cross section of the body of a base polymer bead (D) to the maximum length in the direction perpendicular to D (L), in a case where the base polymer bead has an (almost) constant shape invariably in a cross section taken along a prescribed direction. For example, when the base polymer bead has a cylindrical shape, L corresponds to the height of the cylinder and D corresponds to the outer diameter of the cylinder.

(Example 1)

[Preparation of Crosslinked Expanded Beads]

1. Step (A)

In an autoclave having a volume of 5 L, 3 L of water as a dispersing medium was placed, and 1 kg of the base polymer beads obtained were dispersed in the dispersing medium while stirring.

To the dispersing medium, 3 g of kaolin as a dispersing agent, 0.04 g of sodium alkylbenzenesulfonate as a surfactant, and 7 g of dicumyl peroxide (10-hour half-life temperature: 116.4°C, 1-minute half-life temperature: 175.2°C) (0.7 parts by weight per 100 parts by weight of the base polymer beads) as a crosslinking agent were blended, and 50 g of dry ice (5.0 parts by weight per 100 parts by weight of the base polymer beads) as a blowing agent was placed therein.

2. Steps (B) and (C)

While stirring, the contents of the closed vessel were heated to 160°C (crosslinking temperature) at a rate of temperature rise of 2°C/min and kept at 160°C for 30 minutes to crosslink the TPO included in the base polymer beads [step (B)] and also to impregnate the base polymer beads with the blowing agent, thereby obtaining crosslinked base polymer beads [step (C)].

3. Steps (D) and (E)

Next, while stirring, the contents of the closed vessel were cooled to a temperature of 115°C (crystallizing temperature) at a rate of temperature fall of 1°C/min, and kept at 115°C for 30 minutes while injecting carbon dioxide so as to keep a pressure of 3.0 MPa (G) in the closed vessel, thereby producing a high potential crystal [step (D)]. Then, after stopping stirring, the contents of the closed vessel at 115°C (expanding temperature) were discharged to an atmosphere at an atmospheric pressure to expand the crosslinked base polymer beads impregnated with the blowing agent, thereby obtaining crosslinked expanded beads [step (E)]. The pressure in the closed vessel just before discharging the contents of the vessel (expanding pressure) was 3.0 MPa (G).

(Example 2)

Crosslinked expanded beads were produced in the same manner as in Example 1, except that the amount of the crosslinking agent added was changed to 0.6 parts by weight. The pressure in the closed vessel just before discharging the contents of the vessel (expanding pressure) was 3.0 MPa (G).

(Example 3)

Crosslinked expanded beads were produced in the same manner as in Example 1 except the followings: the amount of the blowing agent added was changed to 7.0 parts by weight; the amount of the crosslinking agent added was changed to 0.5 parts by weight; after the content was kept at 160°C (crosslinking temperature) for 30 minutes, the contents of the closed vessel were cooled to 114°C (crystallizing temperature) at a rate of temperature fall of 1°C/min, and kept at 114°C for 30 minutes while injecting carbon dioxide so as to keep a pressure of 4.0 MPa (G) in the closed vessel; and then the contents of the closed vessel at 114°C (expanding temperature) were discharged to an atmosphere at an atmospheric pressure. The pressure in the closed vessel just before discharging the contents of the vessel (expanding pressure) was 4.0 MPa (G).

(Example 4)

Crosslinked expanded beads were produced in the same manner as in Example 3 except the followings: after the content was kept at 160°C (crosslinking temperature) for 30 minutes, the contents of the closed vessel were cooled to 113°C (crystallizing temperature) at a rate of temperature fall of 1°C/min, and kept at 113°C for 30 minutes while injecting carbon dioxide so as to keep a pressure of 4.0 MPa (G) in the closed vessel; and then the contents of the closed vessel at 113°C (expanding temperature) were discharged to an atmosphere at an atmospheric pressure. The pressure in the closed vessel just before discharging the contents of the vessel (expanding pressure) was 4.0 MPa (G).

(Example 5)

1 kg of the crosslinked expanded beads produced in the same manner as in Example 4 and a solution obtained by dissolving 0.27 g of sodium polyacrylate in 50 ml of water were placed in a blender, and stirred for 15 minutes for mixing. Then, the resultant beads were dried in an oven at 40°C for 12 hours to obtain crosslinked expanded beads with sodium polyacrylate adhered to the surface thereof.

(Example 6)

Crosslinked expanded beads were produced in the same manner as in Example 3 except the followings: the amount of the crosslinking agent added was changed to 0.6 parts by weight; after the content was kept at 160°C (crosslinking temperature) for 30 minutes, the contents of the closed vessel were cooled to 112°C (crystallizing temperature) at a rate of temperature fall of 1°C/min, and kept at 112°C for 30 minutes while injecting carbon dioxide so as to keep a pressure of 4.0 MPa (G) in the sealable vessel; and then the contents of the closed vessel at 112°C (expanding temperature) were discharged to an atmosphere at an atmospheric pressure. The pressure in the closed vessel just before discharging the contents of the vessel (expanding pressure) was 4.0 MPa (G).

(Example 7)

Crosslinked expanded beads were produced in the same manner as in Example 3 except the followings: the amount of the crosslinking agent added was changed to 0.6 parts by weight; after the content was kept at 160°C (crosslinking temperature) for 30 minutes, the contents of the closed vessel were cooled to 113°C (crystallizing temperature) at a rate of temperature fall of 1°C/min, and kept at 113°C for 30 minutes while injecting carbon dioxide so as to keep a pressure of 3.5 MPa (G) in the closed vessel; the content was further kept at 113°C for 5 minutes while injecting carbon dioxide so as to keep a pressure of 4.0 MPa (G) in the closed vessel; and then the contents of the closed vessel at 113°C (expanding temperature) were discharged to an atmosphere at an atmospheric pressure. The pressure in the closed vessel just before discharging the contents of the vessel (expanding pressure) was 4.0 MPa (G).

(Example 8)

[Preparation of Crosslinked Expanded Beads]

1. Step (A)

In an autoclave having a volume of 5 L, 3 L of water as a dispersing medium was placed, and 1 kg of the base polymer beads obtained were dispersed in the dispersing medium while stirring.

To the dispersing medium, 3 g of kaolin as a dispersing agent, 0.04 g of sodium alkylbenzenesulfonate as a surfactant, and 5.5 g of dicumyl peroxide (10-hour half-life temperature: 116.4°C, 1-minute half-life temperature: 175.2°C)

(0.55 parts by weight per 100 parts by weight of the base polymer beads) were blended, and 20 g of dry ice (2.0 parts by weight per 100 parts by weight of the base polymer beads) as a pH regulator for the dispersing medium was placed therein.

2. Step (B)

While stirring, the contents of the closed vessel were heated to 160°C (crosslinking temperature) at a rate of temperature rise of 2°C/min and kept at 160°C for 60 minutes to crosslink the TPO included in the base polymer beads, thereby obtaining crosslinked base polymer beads [step (B)].

Then, the contents of the closed vessel were cooled to 50°C (drawing temperature) and the crosslinked base polymer beads were taken out from the sealable vessel.

3. Steps (A), (C), (D), and (E)

In an autoclave having a volume of 5 L, 3 L of water as a dispersing medium was placed, and 1 kg of the crosslinked base polymer beads obtained were dispersed in the dispersing medium while stirring.

To the dispersing medium, 3 g of kaolin as a dispersing agent, and 0.04 g of sodium alkylbenzenesulfonate as a surfactant were blended, and 70 g of dry ice (7.0 parts by weight per 100 parts by weight of the base polymer beads) as an blowing agent was placed therein [step (A)].

Then, while stirring, the contents of the closed vessel were heated to 119°C (crystallizing temperature) at a rate of temperature rise of 2°C/min and kept at 119°C for 15 minutes while injecting carbon dioxide so as to keep a pressure of 4.0 MPa (G) in the closed vessel, to thereby obtain crosslinked base polymer beads impregnated with the blowing agent [step (C)] while producing a high potential crystal [step (D)].

Then, after stopping stirring, the contents of the closed vessel at 119°C (expanding temperature) were discharged to an atmosphere at an atmospheric pressure to expand the crosslinked base polymer beads impregnated with the blowing agent, thereby obtaining crosslinked expanded beads [step (E)]. The pressure in the sealable vessel just before discharging the contents of the vessel (expanding pressure) was 4.0 MPa (G).

(Example 9)

Crosslinked expanded beads were produced in the same manner as in Example 8 except the followings: the amount of the blowing agent added was changed to 5 parts by weight; the contents of the closed vessel were heated to 119°C (crystallizing temperature) at a rate of temperature rise of 2°C/min, and kept at 119°C for 15 minutes while injecting carbon dioxide so as to keep a pressure of 3.1 MPa (G) in the closed vessel; and then the contents of the closed vessel at 119°C (expanding temperature) were discharged to an atmosphere at an atmospheric pressure. The pressure in the sealable vessel just before discharging the contents of the vessel (expanding pressure) was 3.1 MPa (G).

(Reference Example 10)

Crosslinked expanded beads were produced in the same manner as in Example 8 except the followings: the amount of the blowing agent added was changed to 4 parts by weight; the contents of the closed vessel were heated to 119°C (crystallizing temperature) at a rate of temperature rise of 2°C/min, and kept at 119°C for 15 minutes while injecting carbon dioxide so as to keep a pressure of 2.5 MPa (G) in the closed vessel; and then the contents of the closed vessel at 119°C (expanding temperature) were discharged to an atmosphere at an atmospheric pressure. The pressure in the closed vessel just before discharging the contents of the vessel (expanding pressure) was 2.5 MPa (G).

(Example 11)

Crosslinked expanded beads were produced in the same manner as in Example 8 except the followings: the amount of the blowing agent added was changed to 3 parts by weight; the contents of the closed vessel were heated to 119°C (crystallizing temperature) at a rate of temperature rise of 2°C/min, and kept at 119°C for 15 minutes while injecting carbon dioxide so as to keep a pressure of 2.3 MPa (G) in the closed vessel; and then the contents of the closed vessel at 119°C (expanding temperature) were discharged to an atmosphere at an atmospheric pressure. The pressure in the closed vessel just before discharging the contents of the vessel (expanding pressure) was 2.3 MPa (G).

(Example 12)

Crosslinked expanded beads were produced in the same manner as in Example 8 except the followings: the amount of the crosslinking agent added was changed to 0.50 parts by weight; the amount of the blowing agent added was changed to 4 parts by weight; the contents of the closed vessel were heated to 120°C (crystallizing temperature) at a rate of temperature rise of 2°C/min, and kept at 120°C for 15 minutes while injecting carbon dioxide so as to keep a pressure of 2.5 MPa (G) in the closed vessel; and then the contents of the closed vessel at 120°C (expanding temperature) were discharged to an atmosphere at an atmospheric pressure. The pressure in the closed vessel just before discharging the contents of the vessel (expanding pressure) was 2.5 MPa (G).

(Comparative Example 1)

Crosslinked expanded beads were produced in the same manner as in Example 1 except the followings: the amount of the blowing agent added was changed to 2.0 parts by weight; the amount of the crosslinking agent added was changed to 0.8 parts by weight; after the content was kept at 160°C (crosslinking temperature) for 30 minutes, carbon dioxide was injected to the closed vessel so as to keep a pressure of 1.7 MPa (G) in the closed vessel; and then the contents of the closed vessel at 160°C (expanding temperature) were discharged to an atmosphere at an atmospheric pressure; step (D) (crystallizing step) was undergone. The pressure in the closed vessel just before discharging the contents of the vessel (expanding pressure) was 1.7 MPa (G).

(Comparative Example 2)

Crosslinked expanded beads were produced in the same manner as in Comparative Example 1 except the followings: carbon dioxide was injected to the closed vessel so as to keep a pressure of 1.5 MPa (G) in the closed vessel; and then the contents of the closed vessel at 160°C (expanding temperature) were discharged to an atmosphere at an atmospheric pressure; step (D) (crystallizing step) was undergone. The pressure in the closed vessel just before discharging the contents of the vessel (expanding pressure) was 1.5 MPa (G).

(Comparative Example 3)

Crosslinked expanded beads were produced in the same manner as in Example 1 except the followings: the amount of the blowing agent added was changed to 3.0 parts by weight; the amount of the crosslinking agent added was changed to 0.8 parts by weight; after the contents of the closed vessel were kept at 160°C (crosslinking temperature) for 30 minutes, the content was cooled to 130°C (crystallizing temperature) at a rate of temperature fall of 1°C/min, and kept at 130°C for 30 minutes while injecting carbon dioxide so as to keep a pressure of 2.0 MPa (G) in the closed vessel; and then the contents of the closed vessel at 130°C (expanding temperature) were discharged to an atmosphere at an atmospheric pressure. The pressure in the closed vessel just before discharging the contents of the vessel (expanding pressure) was 2.0 MPa (G).

(Comparative Example 4)

Crosslinked expanded beads were produced in the same manner as in Example 1 except the followings: the amount of the blowing agent added was changed to 4.0 parts by weight; the amount of the crosslinking agent added was changed to 0.8 parts by weight; after the contents of the closed vessel were kept at 160°C (crosslinking temperature) for 30 minutes, the content was cooled to 115°C (crystallizing temperature) at a rate of temperature fall of 1°C/min, and kept at 115°C for 30 minutes while injecting carbon dioxide so as to keep a pressure of 2.5 MPa (G) in the closed vessel; and then the contents of the closed vessel at 115°C (expanding temperature) were discharged to an atmosphere at an atmospheric pressure. The pressure in the closed vessel just before discharging the contents of the vessel (expanding pressure) was 2.5 MPa (G).

(Comparative Example 5)

Crosslinked expanded beads were produced in the same manner as in Example 1 except that the amount of the crosslinking agent added was changed to 0.8 parts by weight. The pressure in the closed vessel just before discharging the contents of the vessel (expanding pressure) was 3.0 MPa (G).

(Comparative Example 6)

Crosslinked expanded beads were produced in the same manner as in Example 1 except that the amount of the crosslinking agent added was changed to 0.4 parts by weight.

(Comparative Example 7)

Crosslinked expanded beads were produced in the same manner as in Example 1 except the followings: the amount of the blowing agent added was changed to 4.0 parts by weight; the amount of the crosslinking agent added was changed to 0.6 parts by weight; after the contents of the closed vessel were kept at 160°C (crosslinking temperature) for 30 minutes, the content was cooled to 118°C (crystallizing temperature) at a rate of temperature fall of 1°C/min, and kept at 118°C for 30 minutes while injecting carbon dioxide so as to keep a pressure of 2.5 MPa (G) in the sealable vessel; and then the contents of the closed vessel at 118°C (expanding temperature) were discharged to an atmosphere at an atmospheric pressure. The pressure in the closed vessel just before discharging the contents of the vessel (expanding pressure) was 2.5 MPa (G).

(Comparative Example 8)

Crosslinked expanded beads were produced in the same manner as in Example 1 except the followings: the amount of the blowing agent added was changed to 7.0 parts by weight; the amount of the crosslinking agent added was changed to 0.6 parts by weight; after the contents of the closed vessel were kept at 160°C (crosslinking temperature) for 30 minutes, the content was cooled to 112°C (crystallizing temperature) at a rate of temperature fall of 1°C/min, and kept at 112°C for 30 minutes while injecting carbon dioxide so as to keep a pressure of 3.0 MPa (G) in the closed vessel; and then the contents of the closed vessel at 112°C (expanding temperature) were discharged to an atmosphere at an atmospheric pressure. The pressure in the closed vessel just before discharging the contents of the vessel (expanding pressure) was 3.0 MPa (G).

<Properties of Crosslinked Expanded Beads>

On the crosslinked expanded beads obtained in Examples and Comparative Examples, measured were the apparent density, the average value of the cell diameter (average cell diameter), the coefficient of variance of the cell diameter, the content of the fraction insoluble in hot xylene, the temperature of the inherent peak, the temperature of the high temperature peak, the heat of the high temperature peak, and the total heat of melting, and the results are shown in the column of "Crosslinked expanded beads" in Tables 1 and 3. These measurements were carried out after conditioning the obtained crosslinked expanded beads by allowing to stand at a relative humidity of 50%, 23°C, and 1 atom for 2 days.

(Apparent Density of Crosslinked Expanded Beads)

100 ml of ethanol at 23°C was placed in a 200-ml measuring cylinder. The crosslinked expanded beads with a bulk volume of about 50 ml, the weight Wa (g) of which had been weighed in advance, were immersed in ethanol using a metallic mesh, and the volume Va ($cm^3$) corresponding to the elevation of the water level was read. Wa/Va was determined, following unit conversion into $kg/m^3$, and the result was taken as the apparent density ($kg/m^3$) of the crosslinked expanded beads.

The measurement was carried out at an air temperature of 23°C and a relative humidity of 50% under atmospheric pressure.

(Average Value of Cell Diameter (Average Cell Diameter), and Coefficient of Variance of the Cell Diameter of Crosslinked Expanded Beads)

Ten crosslinked expanded beads were arbitrarily selected from a group of the crosslinked expanded beads. A crosslinked expanded bead was divided into almost equal two portions by a plane passing through the center of the crosslinked expanded bead, and a macrophotograph of the cross section thereof was taken at a magnification of 50. In the macrophotograph of the cross section obtained, 50 cells on the cross section of the crosslinked expanded bead were arbitrarily selected. The area of the cross section of each cell selected was measured using an image processing software NS2K-pro manufactured by Nanosystem Corporation, and the diameter of a virtual true circle having the same area as the cross section of the cell was taken as the cell diameter of the cell. This operation was carried out for ten expanded beads, and the arithmetic average value of the cell diameter of the cells was taken as the average value of the cell diameter (average cell diameter) of the crosslinked expanded beads.

The coefficient of variance of the cell diameter was determined by dividing the standard deviation of the cell diameter of the cells in the crosslinked expanded beads by the average cell diameter of the cells in the crosslinked expanded beads. The value of the standard deviation was given by the square root of the unbiased variance.

(Content of Fraction Insoluble in Hot Xylene in Crosslinked Expanded Beads)

Approximately 1 g of a sample of crosslinked expanded beads was weighed, which was taken as the sample weight W1b. The crosslinked expanded beads weighed were placed in a 150-ml round-bottom flask, and 100 ml of xylene was poured thereinto. The resultant was heated for 6 hours with a mantle heater under reflux. Then the residue that had not dissolved was filtered off using a 100-mesh metallic mesh and was dried in a drying oven at 80°C under reduced pressure for 8 hours or more. The weight of the dried product obtained W2b was measured. The weight percentage of the weight W2b to the sample weight W1b [(W2b/W1b) x 100] (wt%) was taken as the content of a fraction insoluble in xylene in a molded article of the expanded beads. It is noted that the proportion of the content of a fraction insoluble in hot xylene does not change during the process of in-mold molding of the crosslinked expanded beads, and that the proportion of the content of a fraction insoluble in hot xylene of the molded article is the same as that of the crosslinked expanded beads.

(Temperature of Inherent Peak, Temperature of High Temperature Peak, Heat of High Temperature Peak, and Total Heat of Melting)

A crosslinked expanded bead was cut into almost equal two portions, which was used as a sample. According to the procedure described above with reference to Fig. 1, the heat of the high temperature peak (B) and the total heat of melting [(A) + (B)] were determined from the DSC curve obtained when heating about 2.5 mg of the sample from 23°C to 200°C at a heating rate of 10°C/min using a heat flux differential scanning calorimetry, and the ratio of the heat of melting of the high temperature peak to the total heat of melting "(B)/[(A) + (B)]", was calculated. The melting peak temperature of the inherent peak was taken as the temperature of the inherent peak, and the melting peak temperature of the high temperature peak was taken as the temperature of the high temperature peak.

<Evaluation of Moldability>

The crosslinked expanded beads were placed in a closed vessel, and the vessel was closed. The pressure was applied to the inside of the sealable vessel with compressed air to 0.2 MPa (G) for 12 hours to give inner pressure to the crosslinked expanded beads. The inner pressure of the crosslinked expanded beads taken out from the sealable vessel was 0.2 MPa (absolute pressure). The crosslinked expanded beads having the inner pressure was filled into a mold having a plate-like shape with a length of 250 mm, a width of 200 mm, and a thickness of 20 mm, so that the mold was in a state in which the mold was open 4 mm from the completely closed state (the dimension in the direction of the thickness of the molding cavity of the mold was 24 mm). After the finish of the filling, the mold was completely closed (cracking 4 mm, 20%). Steam was then fed into the mold to heat the crosslinked expanded beads so as to adjust a pressure in the mold to be 0.10 MPa (G), thereby fusion-bonding the crosslinked expanded beads to each other while secondarily expanding the crosslinked expanded beads. The pressure of steam in this time is hereinafter also referred to as a "molding pressure". After cooling, the molded article of the expanded beads was taken out from the mold. The molded article of the expanded beads was further heated for 12 hours in an oven adjusted to 60°C to dry, thereby obtaining a molded article of the expanded beads.

Molded articles of the expanded beads were produced in the similar manner, while changing the molding pressure to 0.28 MPa (G) in increments of 0.02 MPa.

For Examples 1 to 12, molded articles of the expanded beads were produced in the molding pressure range of 0.10 MPa (G) to 0.28 MPa (G), as described above. For Comparative Examples 1 to 8, molded articles of the expanded beads were produced in the molding pressure range of 0.12 MPa (G) to 0.28 MPa (G).

The moldability of the molded articles of the expanded beads obtained was rated in terms of fusion bondability, appearance (frequency of occurrence of void), and recoverability (recoverability from distention or contract after molding) according to the following scale. The rating results are shown in Table 2 and Table 4.

(Fusion bondability)

The fusion bondability of the molded article of the expanded beads was rated according to the following manner. The molded article of the expanded beads was fractured by bending, and the number of the crosslinked expanded beads (C1) and the number of the crosslinked expanded beads that were broken (C2) present on the fracture surface were counted. The ratio of the crosslinked expanded beads that were broken to the crosslinked expanded beads (C2/C1 x 100) was calculated as the material fracture ratio. Such measurement was carried out on 5 different specimens to obtain the material fracture ratio for each specimen, and the arithmetic average thereof was calculated, thereby the fusion bondability was rated according to the following scale.

A: material fracture ratio is 90% or more.
B: material fracture ratio is 20% or more and less than 90%.
C: material fracture ratio is less than 20%.

(Appearance (Frequency of Occurrence of Voids))

For rating the appearance of the surface, a square of 100 mm x 100 mm was drawn in the center region of the molded article of the expanded beads, followed by drawing a diagonal line from the corner of the square area, and the number of voids (gaps) having a size of 1 mm x 1 mm or larger on the diagonal line was counted, which was rated according to the following.

A: the number of voids is less than 5.
B: the number of voids is 5 or more and less than 10.
C: the number of voids is 10 or more.

(Recoverability)

The thicknesses of the center region and the four corner regions of the molded article of the expanded beads obtained were measured, and the ratio of the thickness of the center region to the largest thickness of the thicknesses of the four corner regions was calculated, which was rated according to the following.

A: the thickness ratio is 95% or more.
B: the thickness ratio is 90% or more and less than 95%.
C: the thickness ratio is less than 90%.

(Moldable Range)

The moldable range is defined as the molding pressure within which a molded article is rated A in all of fusion bondability, appearance, and recoverability, and is shown in the row of "Moldable range" in the column of "Evaluation of moldability" in Tables 1 and 3. When a molded article is rated A in all of fusion bondability, appearance, and recoverability at 5 or more points of the molding pressure, the molded article is rated "A"; when at 4 points, rated "B"; when at 3 points, rated "C"; when at 2 points, rated "D"; when at a single point, rated "E"; and when a molded article is moldable at none of molding pressure, rated "X". The results are shown in the row of "Rating" in the column of "Evaluation of moldability".

In a case where molded articles highly rated in a wide molding pressure range can be obtained even when the molding pressures are changed, it can be determined that the expanded beads are moldable in a wide range of the molding conditions and thus excellent in in-mold moldability.

When expanded beads can be molded at a lower molding pressure, the molding cycle is shortened to improve the productivity, and therefore it can be said that such expanded beads are excellent in the productivity of molded articles of the expanded beads.

<Physical Properties of Molded Article of Expanded Beads>

The density, the tensile strength, and the tensile elongation of each molded article of the expanded beads prepared in Examples and Comparative Examples were measured, and the results are shown in the row of "Molded article of expanded beads" in Tables 1 and 3.

After the molded articles of the expanded beads obtained were left to stand in the conditions of a relative humidity of 50%, 23°C, and 1 atom for 2 days for conditioning, the measurements were carried out. For Examples 1 to 7, 9, 10, 12, and Comparative Examples 1 to 5, the molded articles of the expanded beads obtained in the condition of a molding pressure of 0.20 MPa (G) were evaluated. For Example 8, Example 11, and Comparative Example 6, the molded articles of the expanded beads obtained in the conditions of a molding pressure of 0.16 MPa (G), 0.24 MPa (G), and 0.14 MPa (G), respectively, were evaluated. For Comparative Examples 7 and 8, the molded articles of the expanded beads were not evaluated because favorable molded articles of expanded beads were not obtained.

(Density of Molded Article)

Three specimens in the form of a rectangular parallelepiped having a length of 50 mm, a width of 50 mm, and a thickness of 25 mm were each cut out from an arbitrary selected portion of the molded article of the expanded beads so that the specimens did not include a skin layer formed when molding. The weight and the external dimensions of each specimen were measured. The weight W (kg) of a specimen was divided by the volume V (m$^3$) of the specimen, which was determined from the external dimensions thereof, to calculate the density W/V (kg/m$^3$). The densities of the three specimens were each calculated, and the arithmetic average value thereof was taken as the density of the molded article of the expanded beads, which are shown in the row of "Density of molded article" in Tables 1 and 3.

(Tensile Strength and Tensile Elongation)

A rectangular parallelepiped having a size of 120 mm x 25 mm x 10 mm was cut out from the molded article of the expanded beads with a vertical slicer according to JIS K6767:1999 so that all the faces thereof were cut surfaces, thereby preparing a cut-out sample. The cut-out sample was cut with a jig saw into the form of No. 1 dumbbell (a measurement portion having a length of 40 mm, a width of 10 mm, and a thickness of 10 mm), which was used as a specimen. A tensile test was carried out on the specimen at a test speed of 500 mm/min.

Table 1

| | | | Example 1 | Example 2 | Example 3 | Example 4 | Example 5 | Example 6 | Example 7 | Example 8 | Example 9 | Reference Example 10 | Example 11 | Example 12 |
|---|---|---|---|---|---|---|---|---|---|---|---|---|---|---|
| Base polymer | TPO | Type | TPO 1 | TPO 1 | TPO 1 | TPO 1 | TPO 1 | TPO 1 | TPO 1 | TPO 1 | TPO 1 | TPO 1 | TPO 1 | TPO 1 |
| Conditions of production of crosslinked expanded beads | Amount of blowing agent added | Parts by weight | 5 | 5 | 7 | 7 | 7 | 7 | 7 | 7 | 5 | 4 | 3 | 4 |
| | Amount of crosslinking agent added | Parts by weight | 0.7 | 0.6 | 0.5 | 0.5 | 0.5 | 0.6 | 0.6 | 0.55 | 0.55 | 0.55 | 0.55 | 0.50 |
| | Crosslinking | Temperature | °C | 160 | 160 | 160 | 160 | 160 | 160 | 160 | 160 | 160 | 160 | 160 | 160 |
| | | Time | min | 30 | 30 | 30 | 30 | 30 | 30 | 30 | 60 | 60 | 60 | 60 | 60 |
| | | Drawing temperature | °C | - | - | - | - | - | - | - | 50 | 50 | 50 | 50 | 50 |
| | Crystallizing | Temperature | °C | 115 | 115 | 114 | 113 | 113 | 112 | 113 | 119 | 119 | 119 | 119 | 120 |
| | | Pressure | MPa (G) | 3.0 | 3.0 | 4.0 | 4.0 | 4.0 | 4.0 | 3.5 | 4.0 | 3.1 | 2.5 | 2.3 | 2.5 |
| | | Time | mm | 30 | 30 | 30 | 30 | 30 | 30 | 30 | 15 | 15 | 15 | 15 | 15 |
| | Expanding | Temperature | °C | 115 | 115 | 114 | 113 | 113 | 112 | 113 | 119 | 119 | 119 | 119 | 120 |
| | | Pressure | MPa (G) | 3.0 | 3.0 | 4.0 | 4.0 | 4.0 | 4.0 | 4.0 | 4.0 | 3.1 | 2.5 | 2.3 | 2.5 |

| | | | Example 1 | Example 2 | Example 3 | Example 4 | Example 5 | Example 6 | Example 7 | Example 8 | Example 9 | Reference Example 10 | Example 11 | Example 12 |
|---|---|---|---|---|---|---|---|---|---|---|---|---|---|---|
| Crosslinked expanded beads | Apparent density | kg/m$^3$ | 163 | 143 | 133 | 183 | 183 | 205 | 154 | 77 | 120 | 190 | 246 | 168 |
| | Average cell diameter | μm | 121 | 112 | 90 | 98 | 98 | 73 | 96 | 56 | 60 | 62 | 71 | 52 |
| | Coefficient of variance of cell diameter | % | 17 | 19 | 19 | 18 | 18 | 17 | 17 | 19 | 19 | 21 | 17 | 20 |
| | Content of fraction insoluble in hot xylene | wt % | 38 | 21 | 13 | 11 | 11 | 18 | 19 | 36 | 34 | 35 | 34 | 15 |
| | Temperature of high temperature peak | °C | 121.9 | 121.7 | 120.7 | 119.7 | 119.7 | 118.7 | 119.7 | 120.6 | 120.8 | 121.0 | 121.0 | 121.0 |
| | Temperature of inherent peak | °C | 115.6 | 115.5 | 114.9 | 114.5 | 114.5 | 115.2 | 115.5 | 114.7 | 114.7 | 114.9 | 114.6 | 115.1 |
| | Heat of high temperature peak (B) | J/g | 12 | 18 | 10 | 21 | 21 | 25 | 30 | 17 | 16 | 17 | 16 | 14 |
| | Total heat of melting [(A)+(B)] | J/g | 51 | 54 | 52 | 53 | 53 | 51 | 55 | 54 | 53 | 54 | 53 | 51 |
| | (B)/[(A)+(B)] | - | 0.23 | 0.33 | 0.20 | 0.40 | 0.40 | 0.49 | 0.55 | 0.31 | 0.30 | 0.31 | 0.30 | 0.27 |
| Evaluation of moldability | Inner pressure | MPa | 0.2 | 0.2 | 0.2 | 0.2 | 0.2 | 0.2 | 0.2 | 0.2 | 0.2 | 0.2 | 0.2 | 0.2 |
| | Cracking | % | 20 | 20 | 20 | 20 | 20 | 20 | 20 | 20 | 20 | 20 | 20 | 20 |
| | Moldable range | MPa (G) | 0.16-0.24 | 0.16-0.24 | 0.16-0.20 | 0.16-0.22 | 0.12-0.22 | 0.16-0.22 | 0.20-0.24 | 0.10-0.16 | 0.16-0.24 | 0.20-0.28 | 0.24-0.28 | 0.12-0.20 |
| | Rating | - | A | A | C | B | A | B | C | B | A | A | C | A |
| Molded article of expanded beads | Molding pressure | MPa (G) | 0.20 | 0.20 | 0.20 | 0.20 | 0.20 | 0.20 | 0.20 | 0.16 | 0.20 | 0.20 | 0.24 | 0.20 |
| | Density of molded article | kg/m$^3$ | 115 | 105 | 98 | 134 | 124 | 155 | 110 | 63 | 100 | 143 | 210 | 98 |
| | Tensile strength | MPa | 0.71 | 0.68 | 0.69 | 0.66 | 0.67 | 0.78 | 0.61 | 0.49 | 0.61 | 0.87 | 0.95 | 0.60 |
| | Tensile elongation | % | 230 | 240 | 243 | 321 | 330 | 285 | 230 | 240 | 270 | 294 | 205 | 280 |

EP 3 626 768 B1

Table 2

| | | Example 1 | Example 2 | Example 3 | Example 4 | Example 5 | Example 6 | Example 7 | Example 8 | Example 9 | Reference Example 10 | Exampl e 11 | Example 12 |
|---|---|---|---|---|---|---|---|---|---|---|---|---|---|
| Molding pressure 0.10 MPa (G) | Fusion bondability | C | C | C | C | B | C | C | A | C | C | C | B |
| | Appearance | C | C | B | B | B | C | C | A | C | C | C | B |
| | Recoverability | A | A | A | A | A | A | A | A | A | A | A | A |
| Molding pressure 0.12 MPa (G) | Fusion bondability | B | B | C | C | A | C | C | A | B | C | C | A |
| | Appearance | B | B | A | A | A | A | C | A | B | C | C | A |
| | Recoverability | A | A | A | A | A | A | A | A | A | A | A | A |
| Molding pressure 0.14 MPa (G) | Fusion bondability | B | B | B | B | A | B | B | A | B | C | C | A |
| | Appearance | B | B | A | A | A | A | C | A | B | B | C | A |
| | Recoverability | A | A | A | A | A | A | A | A | A | A | A | A |
| Molding pressure 0.16 MPa (G) | Fusion bondability | A | A | A | A | A | A | A | A | A | B | C | A |
| | Appearance | A | A | A | A | A | A | B | A | A | B | C | A |
| | Recoverability | A | A | A | A | A | A | A | A | A | A | A | A |
| Molding pressure 0.18 MPa (G) | Fusion bondability | A | A | A | A | A | A | A | A | A | B | C | A |
| | Appearance | A | A | A | A | A | A | B | A | A | A | B | A |
| | Recoverability | A | A | A | A | A | A | A | B | A | A | A | A |
| Molding pressure 0.20 MPa (G) | Fusion bondability | A | A | A | A | A | A | A | A | A | A | B | A |
| | Appearance | A | A | A | A | A | A | A | A | A | A | B | A |
| | Recoverability | A | A | A | A | A | A | A | C | A | A | A | A |

(continued)

| | | Example 1 | Example 2 | Example 3 | Example 4 | Example 5 | Example 6 | Example 7 | Example 8 | Example 9 | Reference Example 10 | Example 11 | Example 12 |
|---|---|---|---|---|---|---|---|---|---|---|---|---|---|
| Molding pressure 0.22 MPa (G) | Fusion bondability | A | A | A | A | A | A | A | A | A | A | B | A |
| | Appearance | A | A | A | A | A | A | A | A | A | A | A | A |
| | Recoverability | A | A | B | A | A | A | A | C | A | A | A | B |
| Molding pressure 0.24 MPa (G) | Fusion bondability | A | A | A | A | A | A | A | A | A | A | A | A |
| | Appearance | A | A | A | A | A | A | A | A | A | A | A | A |
| | Recoverability | A | A | C | B | B | B | A | C | A | A | A | C |
| Molding pressure 0.26 MPa (G) | Fusion bondability | A | A | A | A | A | A | A | A | A | A | A | A |
| | Appearance | A | A | A | A | A | A | A | A | A | A | A | A |
| | Recoverability | B | B | C | C | C | C | B | C | B | A | A | C |
| Molding pressure 0.28 MPa (G) | Fusion bondability | A | A | A | A | A | A | A | A | A | A | A | A |
| | Appearance | A | A | A | A | A | A | A | A | A | A | A | A |
| | Recoverability | C | C | C | C | C | C | C | C | C | A | A | C |

EP 3 626 768 B1

Table 3

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Base polymer | TPO | Type | TPO 1 | TPO 1 | TPO 1 | TPO 1 | TPO 1 | TPO 1 | TPO 1 | TPO 1 |
| Conditions of production of crosslinked expanded beads | Amount of blowing agent added | Parts by weight | 2 | 2 | 3 | 4 | 5 | 5 | 4 | 7 |
| | Amount of crosslinking agent added | Parts by weight | 0.8 | 0.8 | 0.8 | 0.8 | 0.8 | 0.4 | 0.6 | 0.6 |
| | Crosslinking Temperature | °C | 160 | 160 | 160 | 160 | 160 | 160 | 160 | 160 |
| | Crosslinking Time | min | 30 | 30 | 30 | 30 | 30 | 30 | 30 | 30 |
| | Crystallizing Temperature | °C | - | - | 130 | 115 | 115 | 115 | 118 | 112 |
| | Crystallizing Pressure | MPa(G) | - | - | 2.0 | 2.5 | 3.0 | 3.0 | 2.5 | 3.0 |
| | Crystallizing Time | min | - | - | 30 | 30 | 30 | 30 | 30 | 30 |
| | Expanding Temperature | °C | 160 | 160 | 130 | 115 | 115 | 115 | 118 | 112 |
| | Expanding Pressure | MPa(G) | 1.7 | 1.5 | 2.0 | 2.5 | 3.0 | 3.0 | 2.5 | 3.0 |
| Crosslinked expanded beads | Apparent density | kg/m³ | 180 | 154 | 173 | 232 | 154 | 180 | 131 | 281 |
| | Average cell diameter | μm | 194 | 183 | 126 | 134 | 124 | 122 | 115 | 121 |
| | Coefficient of variance of cell diameter | % | 24 | 25 | 23 | 19 | 21 | 18 | 22 | 17 |
| | Content of fraction insoluble in hot xylene | wt% | 51 | 52 | 49 | 49 | 48 | 2 | 23 | 21 |
| | Temperature of high temperature peak | °C | - | - | - | 121.6 | 121.3 | 121.0 | 121.6 | 118.1 |
| | Temperature of inherent peak | °C | 116.9 | 116.9 | 116.7 | 115.3 | 115.2 | 114.8 | 115.6 | 115.4 |
| | Heat of high temperature peak (B) | J/g | 0 | 0 | 0 | 7 | 4 | 23 | 4 | 35 |
| | Total heat of melting [(A)+(B)] | J/g | 52 | 50 | 49 | 50 | 49 | 56 | 58 | 53 |
| | (B)/[(A)+(B)] | - | 0 | 0 | 0 | 0.14 | 0.08 | 0.41 | 0.07 | 0.66 |

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Evaluation of moldability | Inner pressure | MPa (G) | 0.10 | 0.10 | 0.10 | 0.10 | 0.10 | 0.10 | 0.10 | 0.10 |
| | Cracking | % | 20 | 20 | 20 | 20 | 20 | 20 | 20 | 20 |
| | Moldable range | MPa (G) | 0.18-0.24 | 0.18-0.24 | 0.18-0.24 | 0.20-0.26 | 0.20-0.26 | 0.14 | NA | NA |
| | Rating | - | B | B | B | B | B | E | X | X |
| | Molding pressure | MPa (G) | 0.20 | 0.20 | 0.20 | 0.20 | 0.20 | 0.14 | | |
| Molded article of expanded beads | Density of molded article | kg/m$^3$ | 137 | 121 | 134 | 183 | 114 | 123 | Not evaluated | Not evaluated |
| | Tensile strength | MPa | 0.55 | 0.55 | 0.53 | 0.75 | 0.49 | 0.61 | | |
| | Tensile elongation | % | 155 | 165 | 134 | 175 | 142 | 160 | | |

28

EP 3 626 768 B1

[Table 4]

Table 4

| Molding pressure | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| 0.12 MPa (G) | Fusion bondability | C | C | C | C | C | B | C | C |
| | Appearance | C | C | C | C | C | B | B | C |
| | Recoverability | A | A | A | A | A | A | C | A |
| 0.14 MPa (G) | Fusion bondability | C | C | C | C | C | A | B | C |
| | Appearance | B | B | B | C | C | A | A | C |
| | Recoverability | A | A | A | A | A | A | C | A |
| 0.16 MPa (G) | Fusion bondability | B | B | B | C | C | A | A | C |
| | Appearance | A | A | A | B | B | A | A | C |
| | Recoverability | A | A | A | A | A | B | C | A |
| 0.18 MPa (G) | Fusion bondability | A | A | A | B | B | A | A | C |
| | Appearance | A | A | A | A | A | A | A | C |
| | Recoverability | A | A | A | A | A | C | C | A |
| 0.20 MPa (G) | Fusion bondability | A | A | A | A | A | A | A | C |
| | Appearance | A | A | A | A | A | A | A | C |
| | Recoverability | A | A | A | A | A | C | C | A |
| 0.22 MPa (G) | Fusion bondability | A | A | A | A | A | A | A | C |
| | Appearance | A | A | A | A | A | A | A | C |
| | Recoverability | A | A | A | A | A | C | C | A |

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Molding pressure 0.24 MPa (G) | Fusion bondability | A | A | A | A | A | A | A | C |
| | Appearance | A | A | A | A | A | A | A | C |
| | Recoverability | A | A | A | A | A | C | C | A |
| Molding pressure 0.26 MPa (G) | Fusion bondability | A | A | A | A | A | A | A | C |
| | Appearance | A | A | A | A | A | A | A | C |
| | Recoverability | B | B | B | A | A | C | C | A |
| Molding pressure 0.28 MPa (G) | Fusion bondability | A | A | A | A | A | A | A | C |
| | Appearance | A | A | A | A | A | A | A | C |
| | Recoverability | C | C | C | B | B | C | C | A |

EP 3 626 768 B1

[Results of Evaluation]

In Examples 1 to 9 and 11-12, and Reference example 10, the crosslinked expanded beads satisfied the following conditions: the content of the fraction insoluble in hot xylene is 10 to 40 wt%; the total heat of melting is 40 to 60 J/g; and the ratio of the heat of melting of the high temperature peak to the total heat of melting is 0.1 to 0.6. Therefore, in Examples 1 to 9 and 11-12, and Reference example 10, molded articles having excellent tensile strength were able to be produced.

In Examples 1 to 9 and 11-12, and Reference example 10, in which a high temperature peak was exhibited, a molded article of expanded beads with a desired shape was successfully prepared, even though the content of the fraction insoluble in hot xylene was as low as 10 to 40 wt%. In addition, it is considered that due to the content of the fraction insoluble in hot xylene being as low as 10 to 40 wt%, the fusion bondability of the molded article of the expanded beads was improved to thereby improve the tensile characteristics.

In Comparative Examples 1 to 5, in which the proportion of the content of the fraction insoluble in hot xylene of the crosslinked expanded beads was excessively high, the improving effect on the tensile characteristics (particularly, the tensile elongation) was not exhibited.

In Comparative Example 6, in which the proportion of the content of the fraction insoluble in hot xylene was excessively low, the in-mold moldability was poor though the condition that the ratio of the heat of melting of the high temperature peak to the total heat of melting is 0.15 to 0.6 was satisfied.

In Comparative Examples 7 and 8, in which the condition that the ratio of the heat of melting of the high temperature peak to the total heat of melting is 0.15 to 0.6 was not satisfied though the content of the fraction insoluble in hot xylene was 10 to 40 wt%, a favorable molded article was not obtained.

Reference Signs List

$P_a$ Melting peak (inherent peak)
$P_b$ Melting peak (high temperature peak)
$PT_{ma}$ Peak temperature
$PT_{mb}$ Peak temperature
A Area of inherent peak
B Area of high temperature peak

## Claims

1. Thermoplastic olefin elastomer crosslinked expanded beads, produced by crosslinking and expanding particles comprising a composition including the thermoplastic olefin elastomer as base polymer,

    having a content of a fraction insoluble in hot xylene of 10 to 40 wt%, and
    having a crystal structure such that a melting peak inherent in the thermoplastic olefin elastomer (inherent peak) and one or more melting peaks on a higher temperature side than the inherent peak (high temperature peak) appear on a DSC curve obtained by heating the crosslinked expanded beads from 23°C to 200°C at a heating rate of 10°C/min, wherein in the DSC curve, a total heat of melting is 40 to 60 J/g, and a ratio of a heat of melting of the high temperature peak to the total heat of melting is 0.15 to 0.6,
    and having an average value of cell diameter of 30 to 150 $\mu$m and a coefficient of variance of the cell diameter of 20% or less, and
    wherein the thermoplastic olefin elastomer has a type A durometer hardness of 65 to 90 measured with a type A durometer according to ASTM D2240-05,

    and wherein the content of a fraction insoluble in hot xylene, and the average value of cell diameter and its coefficient of variance are determined as described in the specification.

2. The thermoplastic olefin elastomer crosslinked expanded beads according to claim 1, the content of a fraction insoluble in hot xylene is 10 wt% or more and less than 30 wt%.

3. The thermoplastic olefin elastomer crosslinked expanded beads according to claim 1 or 2, having an apparent density of 30 to 300 kg/m$^3$, wherein the apparent density is being determined as described in the specification.

4. The thermoplastic olefin elastomer crosslinked expanded beads according to any one of claims 1 to 3, wherein the thermoplastic olefin elastomer is a multiblock copolymer comprising a polyethylene block and an ethylene-$\alpha$-olefin copolymer block.

5. An expanded beads molded article produced by subjecting the thermoplastic olefin elastomer crosslinked expanded beads according to any one of claims 1 to 4 to in-mold molding, and wherein the molded article has a tensile elongation of 200 to 370%, wherein, the tensile elongation is being determined as described in the specification.


**Patentansprüche**

1. Thermoplastische Olefinelastomer-vernetzte expandierte Perlen, hergestellt durch Vernetzen und Expandieren von Teilchen, die eine Zusammensetzung umfassen, die das thermoplastische Olefinelastomer als Basispolymer enthält,

mit einem Gehalt an einer in heißem Xylol unlöslichen Fraktion von 10 bis 40 Gew.-%, und
mit einer solchen Kristallstruktur, dass ein dem thermoplastischen Olefinelastomer inhärenter Schmelzpeak (inhärenter Peak) und ein oder mehrere Schmelzpeaks auf einer höheren Temperaturseite als der inhärente Peak (Hochtemperaturpeak) auf einer DSC-Kurve erscheinen, die durch Erhitzen der vernetzten expandierten Perlen von 23° C auf 200° C bei einer Erhitzungsrate von 10° C/min erhalten wird, wobei in der DSC-Kurve die Gesamtschmelzwärme 40 bis 60 J/g beträgt, und das Verhältnis der Schmelzwärme des Hochtemperaturpeaks zur Gesamtschmelzwärme 0.15 bis 0,6 beträgt,
und mit einem Durchschnittswert des Zelldurchmessers von 30 bis 150 $\mu$m und einem Varianzkoeffizienten des Zelldurchmessers von 20 % oder weniger, und
wobei das thermoplastische Olefinelastomer eine Typ-A-Durometerhärte von 65 bis 90 aufweist, gemessen mit einem Typ-A-Durometer gemäß ASTM D2240-05,

und worin der Gehalt einer in heißem Xylol unlöslichen Fraktion und der Durchschnittswert des Zelldurchmessers und sein Varianzkoeffizient wie in der Beschreibung beschrieben bestimmt werden.

2. Thermoplastische Olefinelastomer-vernetzte expandierte Perlen nach Anspruch 1, wobei der Gehalt an einer in heißem Xylol unlöslichen Fraktion 10 Gew.-% oder mehr und weniger als 30 Gew.-% beträgt.

3. Thermoplastische Olefinelastomer-vernetzte expandierte Perlen nach Anspruch 1 oder 2 mit einer scheinbaren Dichte von 30 bis 300 kg/m$^3$, wobei die scheinbare Dichte wie in der Beschreibung beschrieben bestimmt wird.

4. Thermoplastische Olefinelastomer-vernetzte expandierte Perlen nach einem der Ansprüche 1 bis 3, wobei das thermoplastische Olefinelastomer ein Multiblock-Copolymer ist, das einen Polyethylenblock und einen Ethylen-$\alpha$-Olefin-Copolymerblock umfasst.

5. Formkörper aus expandierten Perlen, der hergestellt wird, indem die thermoplastischen Olefinelastomer-vernetzten expandierten Perlen nach einem der Ansprüche 1 bis 4 einer In-Mold-Formung unterzogen werden, und wobei der Formkörper eine Zugdehnung von 200 bis 370 % aufweist, wobei die Zugdehnung wie in der Beschreibung beschrieben bestimmt wird.


**Revendications**

1. Perles expansées réticulées en élastomère d'oléfine thermoplastique, produites par réticulation et expansion de particules comprenant une composition incluant l'élastomère d'oléfine thermoplastique comme polymère de base,

ayant une teneur en fraction insoluble dans le xylène chaud de 10 à 40 % en poids, et
ayant une structure cristalline telle qu'un pic de fusion inhérent à l'élastomère thermoplastique d'oléfine (pic inhérent) et un ou plusieurs pics de fusion du côté d'une température plus élevée que le pic inhérent (pic de haute température) apparaissent sur une courbe DSC obtenue en chauffant les perles expansées réticulées de 23 °C à 200 °C à une vitesse de chauffage de 10 °C/min, dans laquelle, dans la courbe DSC, la chaleur de fusion totale est comprise entre 40 et 60 J/g, et le rapport entre la chaleur de fusion du pic de haute température et la chaleur de fusion totale est compris entre 0,15 et 0,6, et la chaleur de fusion totale est comprise entre 0,15 et 0,6.15 à 0,6,

et dont le diamètre moyen des cellules est compris entre 30 et 150 $\mu$m et dont le coefficient de variance du diamètre des cellules est de 20 % our moins, et

dans lequel l'élastomère d'oléfine thermoplastique a une dureté durométrique de type A de 65 à 90 mesurée avec un duromètre de type A selon la norme ASTM D2240-05,

et dans lequel la teneur en fraction insoluble dans le xylène chaud, le diamètre moyen des cellules et son coefficient de variance sont déterminés comme décrit dans la spécification.

2. Perles expansées réticulées en élastomère d'oléfine thermoplastique selon la revendication 1, dans lesquelles la teneur en fraction insoluble dans le xylène chaud est de 10 % en poids ou plus et moins de 30 % en poids.

3. Perles expansées réticulées en élastomère d'oléfine thermoplastique selon la revendication 1 ou 2, ayant une densité apparente de 30 à 300 kg/m$^3$, la densité apparente étant déterminée comme décrit dans la spécification.

4. Perles expansées réticulées en élastomère d'oléfine thermoplastique selon l'une quelconque des revendications 1 à 3, dans lesquelles l'élastomère d'oléfine thermoplastique est un copolymère multiblocs comprenant un bloc polyéthylène et un bloc copolymère éthylène-$\alpha$-oléfine.

5. Article moulé des perles expansées produit en soumettant les perles expansées réticulées en élastomère d'oléfine thermoplastique selon l'une quelconque des revendications 1 à 4 à un moulage dans le moule, et dans lequel l'article moulé présente un allongement à la traction de 200 à 370 %, l'allongement à la traction étant déterminé comme décrit dans la spécification.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016216527 A
- EP 3296350 A1
- US 2011281963 A1
- WO 2010087111 A1
- US 2016009888 A1
- JP H0881594 A
- US 2017362402 A1
- WO 2016147775 A1
- JP 2013064137 A